(19) Europäisches Patentamt
European Patent Office
Office européen des brevets

(11) **EP 4 697 241 A1**

(12) **EUROPEAN PATENT APPLICATION**
published in accordance with Art. 153(4) EPC

(43) Date of publication:
**18.02.2026 Bulletin 2026/08**

(21) Application number: **23932975.8**

(22) Date of filing: **12.04.2023**

(51) International Patent Classification (IPC):
**G06N 10/00** $^{(2022.01)}$

(52) Cooperative Patent Classification (CPC):
**G06N 10/00**

(86) International application number:
**PCT/JP2023/014799**

(87) International publication number:
**WO 2024/214199 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventor: **KURITA, Tomochika**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(54) **OBSERVABLE MEASUREMENT ASSISTANCE PROGRAM, OBSERVABLE MEASUREMENT ASSISTANCE METHOD, AND INFORMATION PROCESSING DEVICE**

(57) To improve the accuracy of expectation values of observables.

An information processing apparatus 10 generates a plurality of partitions, each satisfying a condition that expectation values of the observables included in the partition are simultaneously measurable. Next, the information processing apparatus 10 extracts, from a second partition 3 among the plurality of partitions, second observables whose expectation values are simultaneously measurable with the expectation value of each of the first observables included in a first partition 2 among the plurality of partitions. Then, the information processing apparatus 10 computes expectation values of the extracted second observables based on measurement results obtained through quantum computation in accordance with a first quantum circuit 4 corresponding to the first partition 2 and a second quantum circuit 5 corresponding to the second partition 3.

FIG. 1

**Description**

Technical Field

The embodiments discussed herein relate to an observable measurement support program, an observable measurement support method, and an information processing apparatus.

Background Art

In a quantum computer, electronic information referred to as quantum bits (qubits) is used. A qubit is capable of being in a superposition state of "0" and "1". It is also possible to create an entangled state using a plurality of qubits. A quantum computer simultaneously and in parallel computes across all possible states by utilizing superposition and entanglement states, thereby enabling solutions to complex problems to be obtained in a short time.

There are problems that are solved much faster by using a quantum computer than by using a classical computer. An algorithm for solving a problem using a quantum computer is called a quantum algorithm, and an algorithm for solving a problem using a classical computer is called a classical algorithm. For example, there are problems for which, while a classical algorithm performs approximately $N^N$ steps of computation (exponential time) to obtain a solution, a quantum algorithm completes the computation in only about $N^2$ steps (polynomial time), where N is a natural number indicating the size of the problem. Examples of problems solvable in a short time by using a quantum computer include Deutsch-Jozsa's algorithm and Shor's algorithm.

In a quantum computer, a measurable value from a quantum bit is a value in the z-axis direction on the Bloch sphere. Furthermore, the value read out from a qubit is limited to either "0" or "1". For example, when the quantum state $1/\sqrt{2} \, (|0\rangle + |1\rangle)$ is measured, "0" and "1" each appear with a 50% probability. This is because measurement destroys the superposition state of the quantum bit and converts it into a classical bit.

Complete determination of a quantum state involves obtaining not only the value along the z-axis on the Bloch sphere but also the values along the x-axis and y-axis. The value along the x-axis or y-axis is measured by performing an operation that transforms the corresponding value into the z-axis before measurement, and by reading the value after the transformation operation. As described above, measurement of a quantum bit destroys its superposition state. Therefore, complete determination of the quantum state involves repeated execution of quantum computation for measurements along each of the x-, y-, and z-axes.

The state of one or more quantum bits is represented using a plurality of observables. To completely determine the state of n quantum bits, it is sufficient to measure the expectation values of $4^n - 1$ observables, where n is a natural number. The quantum state is completely determined by computing the expectation value for each observable. When computing the expectation values for respective observables, in principle, one quantum circuit is created for each observable. In a quantum computer, in order to suppress statistical errors, each observable is typically measured $10^4$ to $10^5$ times.

For a plurality of observables that satisfy predetermined conditions, it is possible to simultaneously measure their expectation values. In the simultaneous measurement of the expectation values of a plurality of observables, a set of simultaneously measurable observables (a partition) is generated. A partition is also referred to as a "clique". In partitioning, each observable is included in exactly one partition. Then, for each group of observables included in the same partition, the simultaneous measurement of expectation values is performed by the quantum computer.

As one technique related to partitioning of observables, a partitioning method has been proposed that reduces the number of partitions, each of which includes simultaneously measurable observables.

Citation List

Patent Literature

PTL1: International Publication Pamphlet No. WO 2022/269712

Summary of Invention

Technical Problem

In a simultaneous measurement of expectation values of observables, a quantum computation and a measurement are repeatedly executed by using a quantum circuit corresponding to a set of observables. Then, based on a plurality of measurement results, an expectation value of each observable is computed. The expectation value of each observable becomes more accurate as the number of measurements increases. When the accuracy of the expectation values of observables is improved, the accuracy of a solution to a problem to be solved by a quantum algorithm is also improved. However, increasing the number of computations per quantum circuit leads to a longer time needed to obtain a solution to the problem. Therefore, it is desirable to improve the accuracy of the expectation values of observables without increasing the number of computations per quantum circuit.

In view of the above, the aim is to improve the accuracy of the expectation values of observables.

Solution to Problem

In one aspect, an observable measurement support program is provided that causes a computer to execute the following processing.

A computer generates a plurality of partitions, each of which is a first subset obtained by dividing a first set including a plurality of observables to be measured and satisfies a condition that expectation values of the observables included in each of the first subsets are simultaneously measurable. The computer extracts a second observable from a second partition, which is other than a first partition among the plurality of partitions, the second observable being such that an expectation value thereof is simultaneously measurable with an expectation value of each of a plurality of first observables included in the first partition. Then, the computer computes the expectation value of the extracted second observable, based on a measurement result obtained after quantum computation according to a first quantum circuit corresponding to the first partition and a measurement result obtained after quantum computation according to a second quantum circuit corresponding to the second partition.

Advantageous Effects of Invention

According to one aspect, it becomes possible to improve the accuracy of the expectation values of observables.

The above and other objects, features and advantages of the present invention will become apparent from the following description taken in conjunction with the accompanying drawings which illustrate, by way of example, preferred embodiments of the invention.

Brief Description of Drawings

[FIG. 1] FIG. 1 illustrates an example of an observable measurement support method according to a first embodiment.
[FIG. 2] FIG. 2 illustrates an example of a system configuration.
[FIG. 3] FIG. 3 illustrates an example of hardware of a classical computer.
[FIG. 4] FIG. 4 illustrates a method for simultaneous measurement of observables.
[FIG. 5] FIG. 5 illustrates an example of determining commutation relations.
[FIG. 6] FIG. 6 illustrates a first example of simultaneous measurement of observables.
[FIG. 7] FIG. 7 illustrates a second example of simultaneous measurement of observables.
[FIG. 8] FIG. 8 illustrates an example of partitioning.
[FIG. 9] FIG. 9 illustrates an example of simultaneously measurable observable groups.
[FIG. 10] FIG. 10 is a block diagram illustrating an example of functions of the classical computer.
[FIG. 11] FIG. 11 illustrates an example of a process performed by a commutation determining unit.
[FIG. 12] FIG. 12 illustrates an example of a partition generation processing.
[FIG. 13] FIG. 13 illustrates an example of repeated processing for partition generation.
[FIG. 14] FIG. 14 illustrates an example of observable extraction from outside a partition.
[FIG. 15] FIG. 15 illustrates an example of an extracted subset.
[FIG. 16] FIG. 16 illustrates a first example of expectation value computation for a simultaneously measurable observable group.
[FIG. 17] FIG. 17 illustrates a second example of the expectation value computation for a simultaneously measurable observable group.
[FIG. 18] FIG. 18 illustrates an example in which the accuracy of expectation values is improved by increasing the number of measurements.
[FIG. 19] FIG. 19 is a flowchart illustrating an example of a procedure for quantum algorithm computation processing.
[FIG. 20] FIG. 20 is a flowchart illustrating an example of a procedure for simultaneously measurable observable group generation processing.
[FIG. 21] FIG. 21 is a flowchart illustrating an example of a procedure for simultaneously measurable candidate set generation processing.
[FIG. 22] FIG. 22 is a flowchart illustrating an example of a procedure for mutually commutative subset generation processing.

[FIG. 23] FIG. 23 illustrates an example of an Ising model equation for generating a mutually commutative subset.

[FIG. 24] FIG. 24 illustrates an example of the number of observables in simultaneously measurable observable groups.

[FIG. 25] FIG. 25 illustrates an example of a graph representing the number of observables in simultaneously measurable observable groups.

[FIG. 26] FIG. 26 illustrates a histogram of observables for each number of quantum circuits used for measurement.

[FIG. 27] FIG. 27 illustrates an example of $b_i$ values determined based on $|\lambda_i|$.

[FIG. 28] FIG. 28 illustrates an example of a relationship between the $b_i$ values and the number of quantum circuits used for measurement.

Description of Embodiments

Hereinafter, embodiments will be described with reference to the drawings. It is noted that, insofar as no inconsistencies arise, a plurality of embodiments may be implemented in combination.

(a) First Embodiment

A first embodiment relates to an observable measurement support method for improving the accuracy of expectation values of observables.

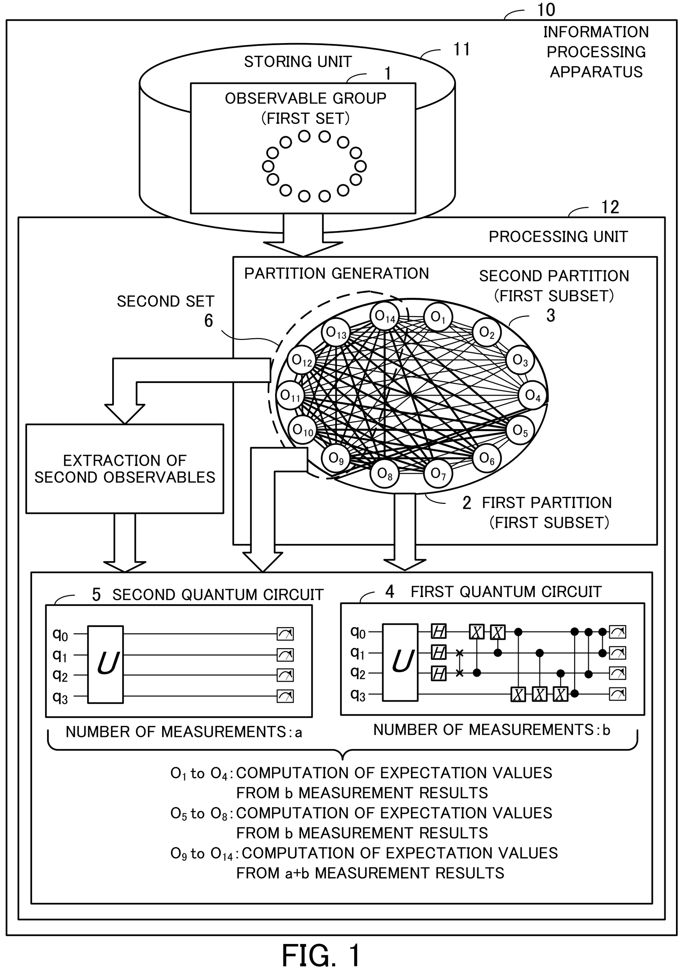

FIG. 1 illustrates an example of the observable measurement support method according to the first embodiment. FIG. 1 depicts an information processing apparatus 10 that implements the observable measurement support method. The information processing apparatus 10 executes, for example, an observable measurement support program to implement the observable measurement support method.

The information processing apparatus 10 includes a storing unit 11 and a processing unit 12. The storing unit 11 is, for example, a memory or a storage device included in the information processing apparatus 10. The processing unit 12 is, for example, a processor or an arithmetic circuit included in the information processing apparatus 10.

The storing unit 11 stores an observable group 1 including a plurality of observables used for computing a solution to a problem to be solved. A set of observables included in the observable group 1 is referred to as a first set. A plurality of observables in the observable group 1 is measured when the solution to the problem to be solved is computed. In the example illustrated in FIG. 1, the first set includes fourteen observables $\{O_1, ..., O_{14}\}$.

The processing unit 12 computes expectation values of the observables in the observable group 1. For example, the processing unit 12 generates a plurality of partitions, each of which is a first subset obtained by dividing the first set including a plurality of observables to be measured, and satisfies a condition that simultaneous measurement of expectation values is possible for the observables included in the first subset. In the example illustrated in FIG. 1, a first partition 2 and a second partition 3 are generated. The first partition 2 includes four observables $\{O_5, ..., O_8\}$. The second partition 3 includes ten observables $\{O_1, ..., O_4, O_9, ..., O_{14}\}$.

The processing unit 12 extracts, from the second partition 3 which is different from the first partition 2, a second observable for each of the plurality of first observables included in the first partition 2. The second observable is capable of being simultaneously measured, in terms of expectation values, with the respective first observable. In the example illustrated in FIG. 1, six observables $\{O_9, ..., O_{14}\}$ are extracted as the second observables. A set of the extracted second observables is referred to as a second set 6.

The processing unit 12 acquires a measurement result obtained after quantum computation according to a first quantum circuit 4 corresponding to the first partition 2, and a measurement result obtained after quantum computation according to a second quantum circuit 5 corresponding to the second partition 3. For example, the processing unit 12 instructs a quantum computer or a quantum simulator to perform quantum computation based on the first quantum circuit 4 and the second quantum circuit 5. The quantum computer or the quantum simulator performs quantum computation and measurement of qubit states according to the instructions, and transmits the measurement results to the processing unit 12.

The processing unit 12 computes expectation values of all the observables in the observable group 1 based on the measurement results of the first quantum circuit 4 and the second quantum circuit 5. For example, the processing unit 12 computes the expectation values of the observables $\{O_5, ..., O_8\}$ included in the first partition 2 based on the measurement result of the first quantum circuit 4. The processing unit 12 also computes the expectation values of the observables $\{O_1, ..., O_4\}$, which have not been extracted as second observables and are included in the second partition 3, based on the measurement result of the second quantum circuit 5. Furthermore, the processing unit 12 computes the expectation values of the observables $\{O_9, ..., O_{14}\}$ extracted as the second observables based on the measurement results of both the first quantum circuit 4 and the second quantum circuit 5.

In this manner, expectation values of the respective observables in the observable group 1 are obtained. Each measurement using a quantum circuit is executed multiple times. Here, the number of measurements using the first quantum circuit 4 is denoted as "a" times (where "a" is a natural number), and the number of measurements using the second quantum circuit 5 is denoted as "b" times (where "b" is a natural number). In this case, expectation values of the four observables $\{O_1, ..., O_4\}$ are computed based on "b" measurement results. Expectation values of another four observables $\{O_5, ..., O_8\}$ are computed based on "a" measurement results. Expectation values of the remaining six observables $\{O_9, ..., O_{14}\}$, which are extracted as the second observables, are computed based on "a + b" measurement results.

As described above, expectation values of the second observables are computed based on a greater number of measurement results than those of the other observables. The greater the number of measurements used for the computation of an expectation value, the higher the accuracy of the expectation value. Therefore, the second observables yield expectation values with higher accuracy than the others.

When the accuracy of the expectation values of the observables used for computing a solution to a problem to be solved is improved, the accuracy of the solution also improves. As a result, a quantum algorithm yields a more accurate computational result.

In order to simultaneously measure the expectation values of the second observables and those of the observables in the first partition 2, the second observables need to be simultaneously measurable with one another as well. In the example of FIG. 1, the second observables are extracted from a common partition. Since all observables included in a single partition are simultaneously measurable, multiple second observables extracted from the same partition are also simultaneously measurable. Therefore, in the example of FIG. 1, all the second observables extracted from the second partition 3 are simultaneously measurable along with the observables in the first partition 2.

On the other hand, in the case where there are three or more partitions, a plurality of second partitions 3 exists other than the first partition 2. In such a case, the second observables that are simultaneously measurable with the respective first observables in the first partition 2 may be extracted from different partitions. In this case, the processing unit 12 performs the following processing.

For example, when a plurality of second observables is extracted, the processing unit 12 generates a second subset from the second set 6, which includes the extracted second observables. The second subset satisfies a condition that the expectation values of the included second observables are simultaneously measurable. In the process of computing the expectation values of the extracted second observables, the processing unit 12 computes the expectation values of those included in the second subset. As a result, even when the second observables are extracted from a plurality of partitions, it becomes possible to appropriately select the second observables that are simultaneously measurable with the first observables in the first partition 2.

When a second subset is to be generated from the second set including all of the extracted second observables, where the expectation values are simultaneously measurable, it is desirable that the second subset include as many second observables as possible. However, when the number of extracted second observables is large, the computational load for maximizing the second subset becomes substantial. In such cases, the processing unit 12 generates the second subset using, for example, a combinatorial optimization method based on the Ising model.

For example, the processing unit 12 generates an Ising model equation. The Ising model equation includes variables indicating whether each second observable is to be included in the second subset. The value of the Ising model equation increases when pairs of second observables that are not simultaneously measurable are included in the second subset, and decreases as the number of second observables included in the second subset increases. The processing unit 12 generates the second subset based on the values of the variables obtained by searching for the ground state using the Ising model equation. The ground state search using the Ising model equation is performed rapidly by using, for instance, an Ising machine. As a result, the second subset is generated in a short amount of time.

The processing unit 12 may also adjust the likelihood of inclusion of each extracted second observable in the second subset by using a coefficient corresponding to a weight when generating the second subset using the Ising model equation. For example, the processing unit 12 generates an Ising model equation that includes a term whose value decreases as the number of second observables included in the second subset increases. This term contains a first coefficient assigned to each second observable, where the first coefficient has a value corresponding to the respective second observable and is multiplied by the variable representing that second observable. The processing unit 12 adjusts the value of the first coefficient corresponding to a second observable, thereby increasing or decreasing the likelihood that the corresponding second observable is included in the second subset.

The processing unit 12 may make second observables that have a significant impact on the accuracy of the solution for the target problem more likely to be included in the second subset, thereby improving the accuracy of the expectation values of the second observables. For example, in some cases, the solution to the target problem is computed using a formula expressed as a linear combination of the expectation values of the second observables. In such a case, the formula includes a second coefficient assigned to each second observable, which is multiplied by the expectation value of that second observable. The processing unit 12 determines the value of the first coefficient to be multiplied with the variable corresponding to each second observable, based on the value of the associated second coefficient.

For example, the processing unit 12 determines a larger value for the first coefficient to be multiplied with the variable of a second observable when the absolute value of the second coefficient to be multiplied with the expectation value of the second observable is greater. As a result, the processing unit 12 makes second observables that have a greater influence on the accuracy of the solution more likely to be included in the second subset, thereby improving the accuracy of the expectation values of these second observables.

(b) Second Embodiment

A second embodiment will now be described. The second embodiment is a computer system that efficiently performs measurement of the complete state of qubits.

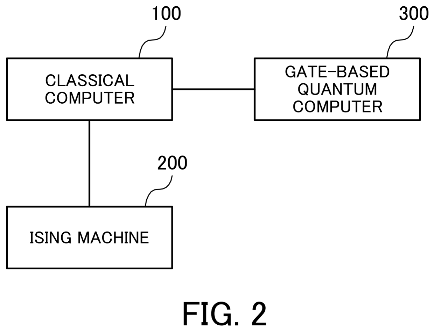

FIG. 2 illustrates an example of a system configuration. A classical computer 100 is connected to an Ising machine 200 and a gate-based quantum computer 300. The classical computer 100 is, for example, a von Neumann-type computer. The Ising machine 200 is a non-von Neumann-type computer used for computing the ground state of an Ising model. The Ising machine 200 may be one that employs superconducting quantum circuits or one that reproduces quantum phenomena using semiconductor circuits. The gate-based quantum computer 300 is a non-von Neumann-type computer that performs operations of quantum gates to solve general-purpose problems.

The classical computer 100 performs quantum computation by controlling the Ising machine 200 and the gate-based quantum computer 300. In doing so, the classical computer 100 classifies a plurality of observables for a target problem into one of a plurality of partitions. This classification process is referred to as partitioning. For example, the classical computer 100 generates an Ising model for generating partitions based on information about sets of observables that are simultaneously measurable, and causes the Ising machine 200 to compute the ground state of the generated Ising model.

The classical computer 100 then controls the gate-based quantum computer 300 to simultaneously measure the expectation values of two or more observables included in the same partition. At this time, the classical computer 100 also performs simultaneous measurement of observables from other partitions that are simultaneously measurable with the observables in the partition being measured. As a result, the number of measurements of expectation values of the observables is increased.

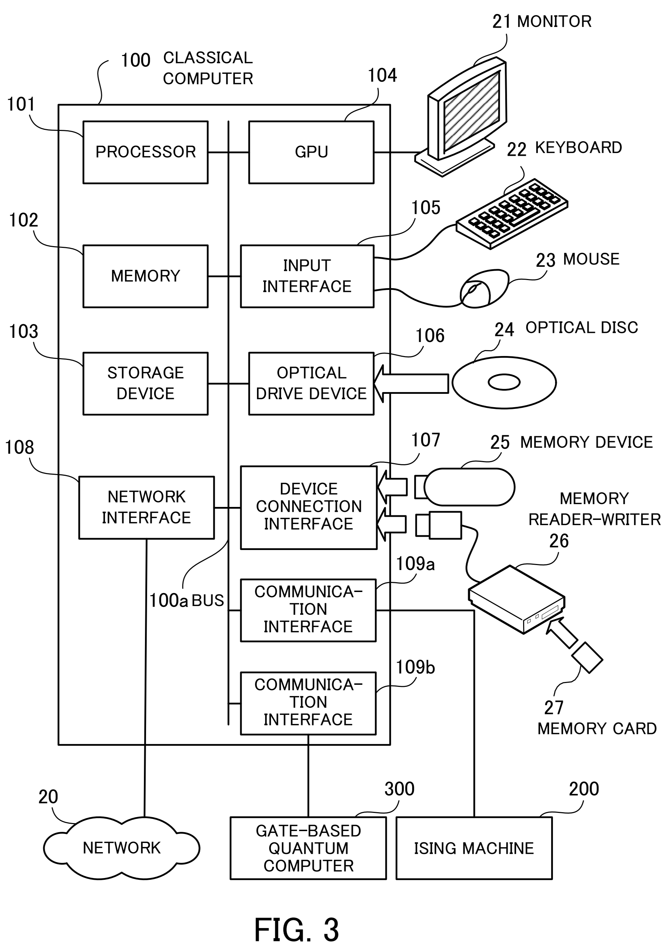

FIG. 3 illustrates an example of hardware of a classical computer. The classical computer 100 is controlled in its entirety by a processor 101. A memory 102 and a plurality of peripheral devices are connected to the processor 101 via a bus 100a. The processor 101 may be a multiprocessor. The processor 101 may be, for example, a central processing unit (CPU), a micro processing unit (MPU), or a digital signal processor (DSP). At least a part of the functions implemented by executing programs on the processor 101 may alternatively be implemented by electronic circuits, such as an application specific integrated circuit (ASIC) or a programmable logic device (PLD).

The memory 102 is used as the main storage of the classical computer 100. At least part of the programs for the operating system (OS) and application programs to be executed by the processor 101 are temporarily stored in the memory 102. Various data used in processing by the processor 101 are also stored in the memory 102. As the memory 102, a volatile semiconductor memory device such as random access memory (RAM) may be used.

The peripheral devices connected to the bus 100a include a storage device 103, a graphics processing unit (GPU) 104, an input interface 105, an optical drive device 106, a device connection interface 107, a network interface 108, and communication interfaces 109a and 109b.

The storage device 103 writes and reads data to and from an internal recording medium electrically or magnetically. The storage device 103 is used as an auxiliary storage device of the classical computer 100. The storage device 103 stores a program for the operating system, application programs, and various data. For example, the storage device 103 may be a hard disk drive (HDD) or a solid state drive (SSD).

The GPU 104 is a computing device that performs image processing and is also referred to as a graphics controller. A monitor 21 is connected to the GPU 104. The GPU 104 displays images on the screen of the monitor 21 in accordance with instructions from the processor 101. The monitor 21 may be a display device using an organic electroluminescence (EL) display or a liquid crystal display.

A keyboard 22 and a mouse 23 are connected to the input interface 105. The input interface 105 transmits signals received from the keyboard 22 and the mouse 23 to the processor 101. The mouse 23 is an example of a pointing device, but other pointing devices may also be used. Examples of other pointing devices include a touch panel, tablet, touchpad, and trackball.

The optical drive device 106 reads data recorded on an optical disc 24 or writes data to the optical disc 24 by using laser light or the like. The optical disc 24 is a portable recording medium on which data is recorded in a manner that allows reading by light reflection. Examples of the optical disc 24 include a digital versatile disc (DVD), a DVD-RAM, a compact disc read-only memory (CD-ROM), CD-recordable (CD-R), and CD-rewritable (CD-RW).

The device connection interface 107 is a communication interface for connecting peripheral devices to the classical computer 100. For example, a memory device 25 or a memory reader-writer 26 may be connected to the device connection interface 107. The memory device 25 is a recording medium equipped with a communication function for communicating with the device connection interface 107. The memory reader-writer 26 is a device that writes data to or reads data from a memory card 27. The memory card 27 is a card-type recording medium.

The network interface 108 is connected to a network 20. The network interface 108 is connected, via the network 20, to other computers (including terminals) not illustrated.

The communication interface 109a, which is connected to the Ising machine 200, communicates with the Ising machine 200. For example, the communication interface 109a transmits an instruction to the Ising machine 200 to search for the ground state of an Ising model. The communication interface 109a also acquires the search result from the Ising machine 200.

The communication interface 109b, which is connected to the gate-based quantum computer 300, communicates with the gate-based quantum computer 300. For example, the communication interface 109b transmits an instruction to the gate-based quantum computer 300 to measure the expectation values of observables. The communication interface 109b also acquires the measurement results of the expectation values from the gate-based quantum computer 300.

The classical computer 100 implements the processing functions of the second embodiment by means of the above-described hardware configuration. The information processing apparatus 10 illustrated in the first embodiment may also be implemented by hardware similar to that of the classical computer 100 illustrated in FIG. 3.

The classical computer 100 implements the processing functions of the second embodiment by executing a program stored, for example, in a computer-readable recording medium. The program describing the processing to be executed by the classical computer 100 may be recorded in various recording media. For example, the program to be executed by the classical computer 100 may be stored in the storage device 103. The processor 101 loads at least part of the program stored in the storage device 103 into the memory 102 and executes the program. The program to be executed by the classical computer 100 may also be recorded in portable recording media such as the optical disc 24, the memory device 25, or the memory card 27. The program stored in such a portable recording medium may be installed into the storage device 103 under control of the processor 101 and then executed. Alternatively, the processor 101 may directly read and execute the program from the portable recording medium.

Next, a method for simultaneously measuring observables will be described in detail. When quantum superposition, quantum entanglement, and probabilistic mixtures are taken into account, a quantum state is represented using a density operator $\rho$. The density operator $\rho$ is expressed as a $2^n \times 2^n$ matrix, where n denotes the number of qubits. The density operator $\rho$ is represented using a plurality of observables (64 observables in the case of three qubits). Each observable serves as a linearly independent basis that constitutes the density operator $\rho$ representing the quantum state. That is, in the case of three qubits, $\rho$ is represented by the following formula.

$$\rho = \lambda_0 I_0 I_1 I_2 + \lambda_1 X_0 I_1 I_2 + \lambda_2 Y_0 I_1 I_2 + \lambda_3 Z_0 I_1 I_2 + \lambda_4 I_0 X_1 I_2 + \lambda_5 X_0 X_1 I_2 + ... + \lambda_{62} y_0 Z_1 Z_2 + \lambda_{63} Z_0 Z_1 Z_2$$

The coefficients $\lambda_0$ through $\lambda_{63}$ are real numbers. The indexed symbols X, Y, and Z are Pauli operators, which correspond to $2 \times 2$ Pauli matrices ($\sigma_x$, $\sigma_y$, $\sigma_z$). The numerical subscripts indicate the indices of the qubits to be measured. The indexed symbol I is an identity operator, which corresponds to the $2 \times 2$ identity matrix. The identity operator is also a type of Pauli operator.

An observable is represented by a sequence of Pauli operators, known as a Pauli string. A Pauli string represents the tensor product of its constituent Pauli operators. The expectation value of the observable corresponding to the k-th term (where k is a natural number) is denoted by $\lambda_k$. For example, the expectation value of $X_0 X_1 I_2$ is $\lambda_5$.

Since $\lambda_0$ is always 1, its expectation value does not need to be measured. As a result, as described above, the number of observables to be measured in order to fully determine the state of n qubits is $4^n - 1$. For example, when n = 1, the state of the qubit is fully determined by measuring three observables: {X, Y, Z}. When n = 2, the number of observables whose expectation values are to be measured is 15, such as: {$I_0 X_1$, $I_0 Y_1$, $I_0 Z_1$, $X_0 I_1$, $X_0 X_1$, $X_0 Y_1$, $X_0 Z_1$, $Y_0 I_1$, $Y_0 X_1$, $Y_0 Y_1$, $Y_0 Z_1$, ...}.

In the measurement of expectation values of a large number of observables, it is sometimes possible to simultaneously measure multiple observables by performing gate operations prior to measurement.

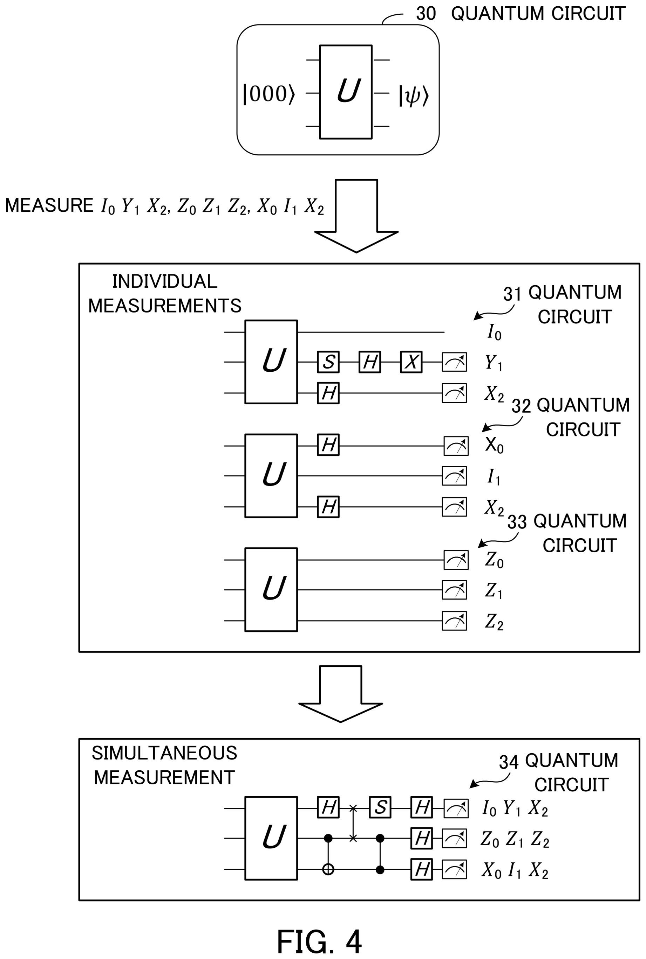

FIG. 4 illustrates a method for simultaneous measurement of observables. In the example depicted in FIG. 4, it is assumed that a quantum state $|\psi\rangle$ of three qubits is to be determined. Three observables "$I_0 Y_1 X_2$, $Z_0 Z_1 Z_2$, $X_0 I_1 X_2$" associated with a quantum circuit 30 corresponding to a problem to be solved are to be measured. The horizontal lines in the quantum circuit 30 correspond to qubits.

When individual measurements are performed, quantum circuits 31 through 33 corresponding to each of the three observables are generated. Rectangular symbols placed along the horizontal lines of the quantum circuits 31 through 33 represent quantum gates applied to each qubit. The rectangle labeled "S" indicates an S gate. The rectangle labeled "X" indicates an X gate. The rectangle labeled "H" indicates an H gate (Hadamard gate). At the positions where measurement symbols are indicated for each qubit, the state of the corresponding qubit is measured.

For example, in the quantum circuit 31, in order to compute the expectation value of the observable "$I_0Y_1X_2$", the expectation values of "$I_0$", "$Y_1$", and "$X_2$" are measured using three qubits. "$I_0$", which corresponds to the 0th qubit, is an identity operator, and measurement of its expectation value is not performed. For the 1st qubit, operations of the S gate, H gate, and X gate are performed. Accordingly, the expectation value of $Y_1$ is obtained from the 1st qubit. For the 2nd qubit, the H gate is applied, allowing the expectation value of $X_2$ to be obtained from the 2nd qubit. Based on these measurement results, the expectation value of the observable "$I_0Y_1X_2$" is obtained.

In the quantum circuit 32, in order to compute the expectation value of the observable "$X_0I_1X_2$", the expectation values of "$X_0$", "$I_1$", and "$X_2$" are measured using three qubits. "$I_1$", which corresponds to the 1st qubit, is an identity operator, and measurement of its expectation value is not performed. For the 0th qubit, the H gate is applied, allowing the expectation value of $X_0$ to be obtained. For the 2nd qubit, the H gate is applied, allowing the expectation value of $X_2$ to be obtained. Based on these measurement results, the expectation value of the observable "$X_0I_1X_2$" is obtained.

In the quantum circuit 33, in order to compute the expectation value of the observable "$Z_0Z_1Z_2$", the expectation values of "$Z_0$", "$Z_1$", and "$Z_2$" are measured using three qubits. In the quantum circuit 33, no operations are performed by quantum gates on the output side of the original quantum circuit 30, and the expectation values of "$Z_0$", "$Z_1$", and "$Z_2$" are obtained by measuring each of the 0th through 2nd qubits. Based on these measurement results, the expectation value of the observable "$Z_0Z_1Z_2$" is obtained.

In each of the quantum circuits 31 through 33, the expectation value of a single observable is obtained based on the measurement results of the three qubits. Therefore, in order to obtain the expectation values of the three observables, the states of the qubits are measured using the three quantum circuits 31 through 33.

In a quantum circuit 34 for simultaneous measurement, an H gate is applied to the 0th qubit at the output side of the quantum circuit 30, followed by a CNOT gate where the 1st qubit is the control bit and the 2nd qubit is the target bit. Next, a SWAP gate is applied between the 0th and 1st qubits. Then, an S gate is applied to the 0th qubit, and a CZ gate is applied where the 1st qubit is the control bit and the 2nd qubit is the target bit. Finally, an H gate is applied to each of the qubits.

By measuring the 0th qubit in the quantum circuit 34, the expectation value of the observable "$I_0Y_1X_2$" is obtained. By measuring the 1st qubit in the quantum circuit 34, the expectation value of the observable "$Z_0Z_1Z_2$" is obtained. By measuring the 2nd qubit in the quantum circuit 34, the expectation value of the observable "$X_0I_1X_2$" is obtained.

In the quantum circuit 34, one expectation value of an observable is measured from one qubit, and the expectation values of the three observables are simultaneously measured. In this manner, the three observables that are measured individually using the quantum circuits 31 through 33 are simultaneously measured by the single quantum circuit 34.

There are conditions for observables to be simultaneously measurable. Specifically, two observables A and B are simultaneously measurable if "AB = BA" (i.e., they are commutative). For example, to determine whether two observables commute, the commutation or anticommutation (commutation relations) of the operators corresponding to the same qubit is checked.

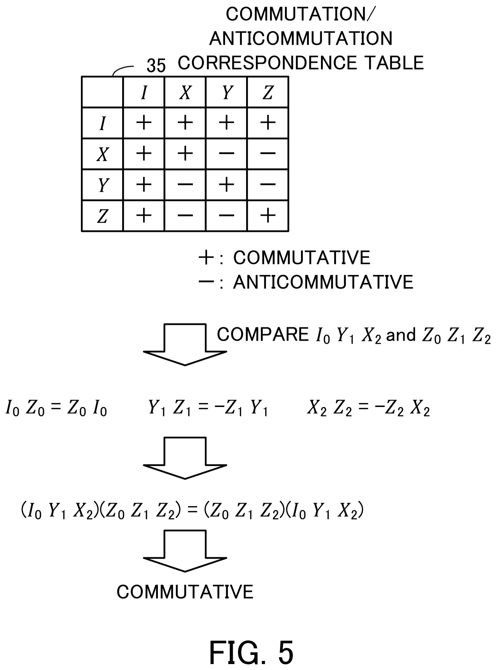

FIG. 5 illustrates an example of determining commutation relations. A commutation/anticommutation correspondence table 35 indicates, for each pair of operators, whether the operators are commutative or anticommutative. A symbol indicating whether the operator corresponding to the row and the operator corresponding to the column are commutative or anticommutative is provided at the intersection of the row and column. A "+" symbol indicates commutative, while a "-" symbol indicates anticommutative. In the case of commutative operators, swapping the order of multiplication does not change the result, whereas in the case of anticommutative operators, swapping the order reverses the sign of the result.

For example, in the case of $I_0Y_1X_2$ and $Z_0Z_1Z_2$, each of the three corresponding operator pairs, $(I_0, Z_0)$, $(Y_1, Z_1)$, and $(X_2, Z_2)$, is checked for commutation or anticommutation. In this case, $I_0$ and $Z_0$ commute, while $Y_1$ and $-Z_1$ anticommute, and $X_2$ and $-Z_2$ also anticommute. If the number of anticommutative pairs is even (including zero), then the two observables are considered commutative; that is, $I_0Y_1X_2$ and $Z_0Z_1Z_2$ commute.

The expectation values of individual observables that belong to a set of mutually commutative observables are computed from the measurement result of the same quantum circuit.

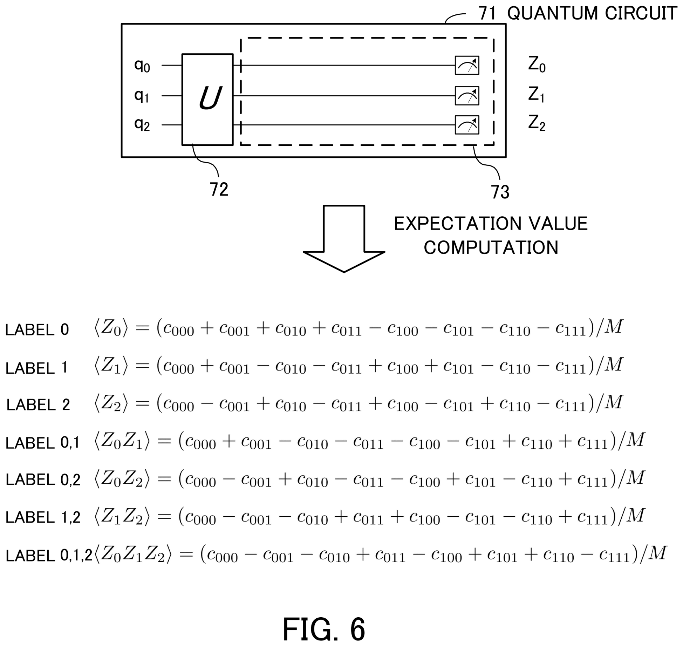

FIG. 6 illustrates a first example of simultaneous measurement of observables. For example, a quantum circuit 71 includes a partial quantum circuit 72 that generates a quantum state to be measured for three qubits $q_0$, $q_1$, and $q_2$, and a partial quantum circuit 73 that performs a transformation so that the measured values correspond to values along the Z-axis. In the quantum circuit 71, the Z-axis values $Z_0$, $Z_1$, and $Z_2$ of the respective qubits after the gate operations by the partial quantum circuit 72 are subject to measurement. Accordingly, the partial quantum circuit 73 includes only the measurement operations.

In the quantum circuit 71, simultaneous measurement of seven observables ($2^3 - 1$) is performed. The simultaneously measurable observables are: "$Z_0I_1I_2$", "$I_0Z_1I_2$", "$I_0I_1Z_2$", "$Z_0Z_1I_2$", "$Z_0I_1Z_2$", "$I_0Z_1Z_2$", and "$Z_0Z_1Z_2$". For each observable, the qubit indices used for the expectation value computation are represented by labels. The number of times each combination of qubit measurement results occurs is denoted by $c_m$ (count). Here, m is a three-digit value indicating the combination of the measurement results of the three qubits: the first digit represents the result for the qubit $q_0$,

the second for the qubit $q_1$, and the third for the qubit $q_2$. For example, $C_{000}$ indicates the count for which the measurement results "0, 0, 0" have been obtained for the qubit $q_0$, the qubit $q_1$, and the qubit $q_2$, respectively. In addition, $C_{001}$ indicates the count for which the measurement results "0, 0, 1" have been obtained for the qubit $q_0$, the qubit $q_1$, and the qubit $q_2$, respectively.

In this case, the expectation value is computed by taking the total count of measurement results in which an even number of the qubits specified by the observable have a result of 1, subtracting the total count in which that number is odd, and dividing the result by the total number of measurements.

For example, in the case of the observable labeled 0, the sign of the count is determined based on the measurement result of the qubit $q_0$. For the count in which the measurement result of the qubit $q_0$ is 0, the number of labels with a measurement result of 1 is zero (even). For the count in which the measurement result of the qubit $q_0$ is 1, the number of labels with a measurement result of 1 is one (odd).

In addition, in the case of the observable labeled 0, 1, the sign of the count is determined based on the measurement results of the qubits $q_0$ and $q_1$. For the count in which the measurement results of the qubits $q_0$ and $q_1$ are "0, 0", the number of labels with a measurement result of 1 is zero (even). For the count in which the measurement results of the qubits $q_0$ and $q_1$ are "0, 1", the number of labels with a measurement result of 1 is one (odd). For the count in which the measurement results of the qubits $q_0$ and $q_1$ are "1, 0", the number of labels with a measurement result of 1 is one (odd). For the count in which the measurement results of the qubits $q_0$ and $q_1$ are "1, 1", the number of labels with a measurement result of 1 is two (even).

Similarly, for each count corresponding to a combination of measurement results of the qubits, it is determined whether the number of qubits, among the qubits specified by the labels, that have a measurement result of 1 is even or odd. If the number is even, a positive sign is assigned to the count; if the number is odd, a negative sign is assigned to the count. When the number of measurements performed using the quantum circuit 71 is denoted by M (M is a natural number), the expectation values of the observables that are simultaneously measurable are as follows.

The expectation value $<Z_0>$ of the observable "$Z_0 I_1 I_2$" labeled 0 is given by: $c_{000} + c_{001} + c_{010} + c_{011} - c_{100} - c_{101} - c_{110} - c_{111}$ /M. The expectation value $<Z_1>$ of the observable "$I_0 Z_1 I_2$" labeled 1 is given by: $(c_{000} + c_{001} - c_{010} - c_{011} + c_{100} + c_{101} - c_{110} - c_{111})$/M. The expectation value $<Z_2>$ of the observable "$I_0 I_1 Z_2$" labeled 2 is given by: $(c_{000} - c_{001} + c_{010} - c_{011} + c_{100} - c_{101} + c_{110} - c_{111})$ /M.

The expectation value $<Z_0 Z_1>$ of the observable "$Z_0 Z_1 I_2$" labeled 0, 1 is given by: $(c_{000} + c_{001} - c_{010} - c_{011} - C_{100} - c_{101} + c_{110} + c_{111})$/M. The expectation value $<Z_0 Z_2>$ of the observable "$Z_0 I_1 Z_2$" labeled 0, 2 is given by: $(c_{000} - c_{001} + c_{010} - c_{011} - c_{100} + c_{101} - c_{110} + c_{111})$ /M. The expectation value $<Z_1 Z_2>$ of the observable "$I_0 Z_1 Z_2$" labeled 1, 2 is given by: $(c_{000} - c_{001} - c_{010} + c_{011} + c_{100} - c_{101} - c_{110} + c_{111})$/M.

The expectation value $<Z_0 Z_1 Z_2>$ of the observable "$Z_0 Z_1 Z_2$" labeled 1, 2, 3 is given by: $(c_{000} - c_{001} - c_{010} + c_{011} - c_{100} + c_{101} + c_{110} - c_{111})$/M.

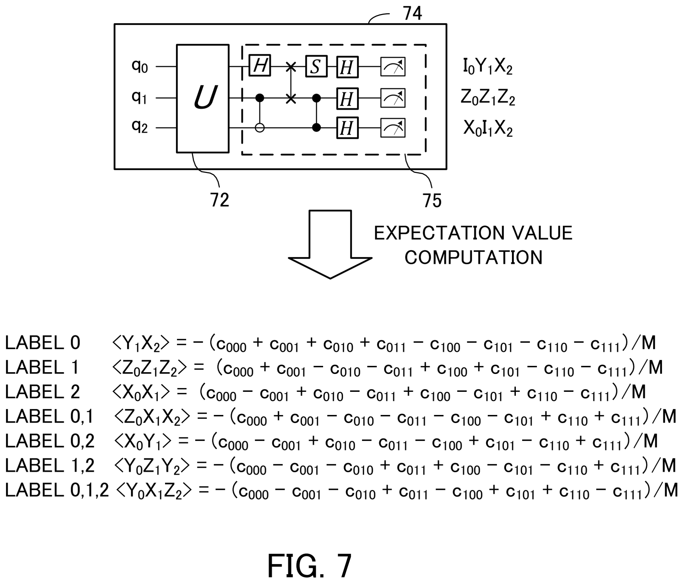

FIG. 7 illustrates a second example of simultaneous measurement of observables. In this example, a quantum circuit 74 includes the partial quantum circuit 72, which is the same as that in the quantum circuit 71 (see FIG. 6), and a partial quantum circuit 75 that transforms the values of predetermined observables into values along the Z-axis. In the partial quantum circuit 75, the observables "$I_0 Y_1 X_2$", "$Z_0 Z_1 Z_2$", and "$X_0 I_1 X_2$" after the gate operations performed by the partial quantum circuit 72 are subject to measurement. After the gate operations performed by the partial quantum circuit 75, the state of the qubit $q_0$ represents the observable "$I_0 Y_1 X_2$", the state of the qubit $q_1$ represents the observable "$Z_0 Z_1 Z_2$", and the state of the qubit $q_2$ represents the observable "$X_0 I_1 X_2$".

In this case, the expectation value $<Y_1 X_2>$ of the observable "$I_0 Y_1 X_2$" labeled 0 is given by: $- (c_{000} + c_{001} + c_{010} + c_{011} - c_{100} - c_{101} - c_{110} - c_{111})$ /M. As in this example, there may be cases where a negative sign is assigned to the expectation value. The expectation value $<Z_0 Z_1 Z_2>$ of the observable "$Z_0 Z_1 Z_2$" labeled 1 is given by: $(c_{000} + c_{001} - c_{010} - c_{011} + c_{100} + c_{101} - c_{110} - c_{111})$ /M. The expectation value $<X_0 X_2>$ of the observable "$X_0 I_1 X_2$" labeled 2 is given by: $(c_{000} - c_{001} + c_{010} - c_{011} + c_{100} - c_{101} + c_{110} - c_{111})$/M.

The tensor product of the observable "$I_0 Y_1 X_2$", which is associated with the qubit $q_0$ and the observable "$Z_0 Z_1 Z_2$", which is associated with the qubit $q_1$ is $(Y_1 X_2)(Z_0 Z_1 Z_2) = Z_0 X_1 Y_2$. Accordingly, the observable labeled 0, 1 is "$Z_0 X_1 Y_2$", and the expectation value $<Z_0 X_1 Y_2>$ of the observable "$Z_0 X_1 Y_2$" is given by: $- (c_{000} + c_{001} - c_{010} - c_{011} - c_{100} - c_{101} + c_{110} + c_{111})$ /M.

The tensor product of the observable "$I_0 Y_1 X_2$", which is associated with the qubit $q_0$ and the observable "$X_0 I_1 X_2$", which is associated with the qubit $q_2$ is $(Y_1 X_2)(X_0 X_2) = X_0 Y_1$. Accordingly, the observable labeled 0, 2 is "$X_0 Y_1 I_2$", and the expectation value $<X_0 Y_1>$ of the observable "$X_0 Y_1 I_2$" is given by: $- (c_{000} - C_{001} + c_{010} - c_{011} - C_{100} + c_{101} - c_{110} + c_{111})$ /M.

The tensor product of the observable "$Z_0 Z_1 Z_2$", which is associated with the qubit $q_1$ and the observable "$X_0 I_1 X_2$", which is associated with the qubit $q_2$ is $(Z_0 Z_1 Z_2)(X_0 X_2) = -Y_0 Z_1 Y_2$. Accordingly, the observable labeled 1, 2 is "$Y_0 Z_1 Y_2$", and the expectation value $<Y_0 Z_1 Y_2>$ of the observable "$Y_0 Z_1 Y_2$" is given by: $- (c_{000} - c_{001} + c_{010} - c_{011} - c_{100} + c_{101} - c_{110} + c_{111})$/M.

The tensor product of the observable "$I_0 Y_1 X_2$", which is associated with the qubit $q_0$, the observable "$Z_0 Z_1 Z_2$", which is associated with the qubit $q_1$, and the observable "$X_0 I_1 X_2$", which is associated with the qubit $q_2$ is $(Y_1 X_2)(Z_0 Z_1 Z_2)$

$(X_0X_2) = Y_0X_1Z_2$. Accordingly, the observable labeled 0, 1, 2 is "$Y_0X_1Z_2$", and the expectation value $<Y_0X_1Z_2>$ of the observable "$Y_0X_1Z_2$" is given by: $- (c_{000} - c_{001} - c_{010} + c_{011} - c_{100} + c_{101} + c_{110} - c_{111})/M$.

As illustrated in FIGS. 6 and 7, multiple observables are simultaneously measured using a single quantum circuit. In the partitioning of observables, the partitions are generated such that all combinations of observables within the same partition are commutative. Consequently, the expectation values of these observables are simultaneously measurable using a single quantum circuit.

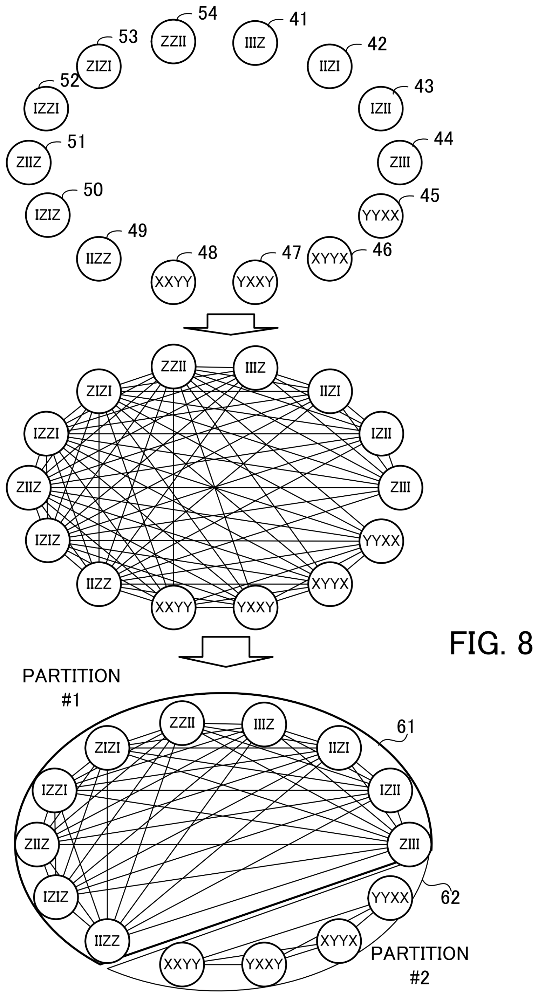

FIG. 8 illustrates an example of partitioning. For example, for fourteen observables 41 through 54, commutation relations with other observables are determined. In the example of FIG. 8, pairs of observables that share a commutative relation are connected by lines. Based on the commutation relations between the observables, partitions 61 and 62 are generated. All combinations of observables belonging to the partition 61 are commutative. Similarly, all combinations of observables belonging to the partition 62 are also commutative.

Here, a method for improving the accuracy of the expectation value of each observable through partitioning is considered. The accuracy of the expectation value for each observable is improved by increasing the number of measurements. Furthermore, in the computation of the expectation value of each observable, it does not pose a problem even if the number of measurements differs among the observables. Accordingly, the classical computer 100 utilizes the generated partitions 61 and 62 and allows a single observable to be measured using two or more quantum circuits.

For example, with one quantum circuit including n qubits, information on $2^n - 1$ observables is obtained. On the other hand, the number of observables included in each partition is often less than $2^n - 1$. When measuring the expectation values of the observables included in each partition, if observables that are not included in the partition are simultaneously measurable with the observables included in the partition, then the number of measurements for such observables is increased. That is, the classical computer 100 increases the number of measurements for one observable by measuring the observable using two or more quantum circuits, thereby allowing a more accurate expectation value for the observable to be obtained. Accordingly, the classical computer 100 generates a union of the observables included in the partition and the other observables that are simultaneously measurable with the observables included in the partition, and defines the union as a group of simultaneously measurable observables. The classical computer 100 then generates a quantum circuit for each group of simultaneously measurable observables and performs quantum computation and measurement.

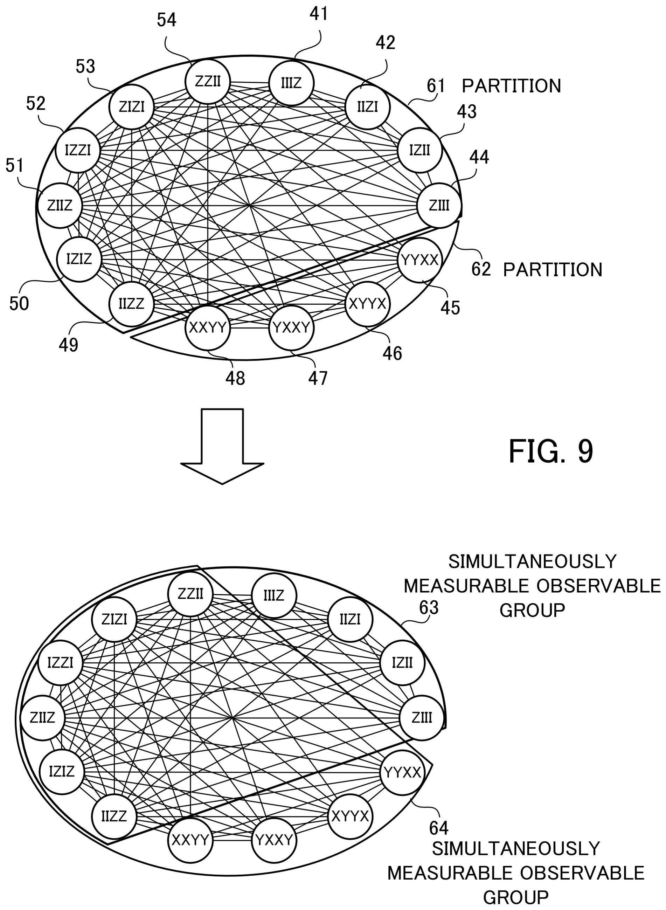

FIG. 9 illustrates an example of simultaneously measurable observable groups. In the example of FIG. 9, a simultaneously measurable observable group 63 is generated based on the partition 61. Also, a simultaneously measurable observable group 64 is generated based on the partition 62. The plurality of observables included in the simultaneously measurable observable group 63 is mutually commutative. Similarly, the plurality of observables included in the simultaneously measurable observable group 64 is mutually commutative.

Among all the observables 41 through 54 to be measured, the observables 41 through 44 belong only to the simultaneously measurable observable group 63. The observables 45 through 48 belong only to the simultaneously measurable observable group 64. On the other hand, the observables 49 through 54 belong to both the simultaneously measurable observable group 63 and the simultaneously measurable observable group 64.

The classical computer 100 generates a quantum circuit for each of the simultaneously measurable observable groups 63 and 64, and causes the gate-based quantum computer 300 to execute quantum computation for each quantum circuit. The classical computer 100 then computes the expectation values of the observables belonging to each of the simultaneously measurable observable groups 63 and 64, based on the values measured by the quantum computation corresponding to the quantum circuit. As a result, for the observables 49 through 54, the expectation values are computed based on measurements obtained from multiple quantum circuits, and the number of measurements for the expectation values is increased. By increasing the number of measurements, the measurement accuracy of the expectation values for the observables 49 through 54 is improved, and the accuracy of the solution calculated based on the expectation values of all the observables 41 through 54 is also improved.

A method for accurately computing a solution to a problem to be solved will be described in detail below. This method includes generating the simultaneously measurable observable groups 63 and 64, and simultaneously computing the expectation values of the observables belonging to the simultaneously measurable observable group 63 and the simultaneously measurable observable group 64.

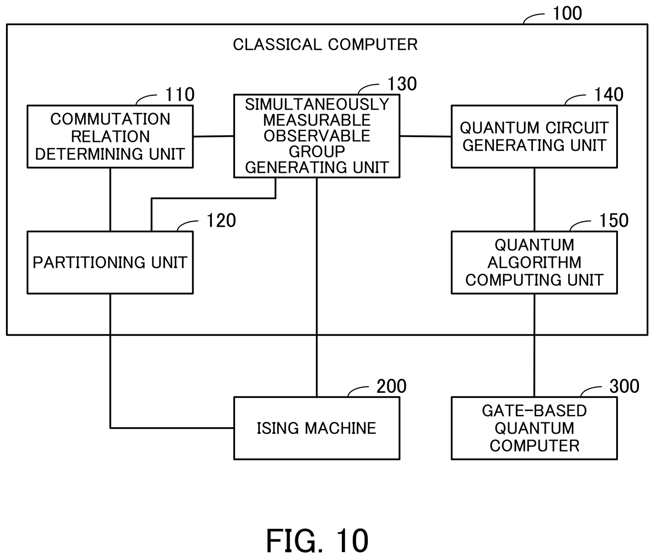

FIG. 10 is a block diagram illustrating an example of the functions of the classical computer. The classical computer 100 includes a commutation relation determining unit 110, a partitioning unit 120, a simultaneously measurable observable group generating unit 130, a quantum circuit generating unit 140, and a quantum algorithm computing unit 150.

The commutation relation determining unit 110 determines the commutation relation for every combination of observables to be measured.

The partitioning unit 120 partitions a group of observables based on the commutation relations among the observables. For example, the partitioning unit 120 performs partitioning using the Ising machine 200. When using the Ising machine 200, the partitioning unit 120 creates an Ising model in which the energy becomes lower as the number of observables included in a partition increases. The partitioning unit 120 instructs the Ising machine 200 to search for the ground state of the created Ising model. In response, the Ising machine 200 returns information on the observables included in the partition.

The simultaneously measurable observable group generating unit 130 searches for other observables that are simultaneously measurable with the observables within each partition, based on the commutation relations among the observables, and generates simultaneously measurable observable groups. For example, the simultaneously measurable observable group generating unit 130 generates simultaneously measurable observable groups using the Ising machine 200. When using the Ising machine 200, the simultaneously measurable observable group generating unit 130 creates an Ising model in which the energy becomes lower as the number of observables that are simultaneously measurable with the observables included in the partition increases. The simultaneously measurable observable group generating unit 130 instructs the Ising machine 200 to search for the ground state of the created Ising model. In response, the Ising machine 200 returns information on the observables that are simultaneously measurable with the observables included in the partition.

The quantum circuit generating unit 140 generates quantum circuits for measuring the observables. For example, the quantum circuit generating unit 140 generates, for each simultaneously measurable observable group, a quantum circuit corresponding to the observables included in the simultaneously measurable observable group.

The quantum algorithm computing unit 150 controls the gate-based quantum computer 300 to perform quantum computation according to the generated quantum circuits and obtains measurement results. The quantum algorithm computing unit 150 computes the expectation values of the observables based on the measurement results of the quantum circuits. The quantum algorithm computing unit 150 then computes a solution to the problem to be solved based on the expectation values of the observables.

Note that each functional element within the classical computer 100 illustrated in FIG. 10 may be implemented, for example, by executing program modules corresponding to the respective elements on a processor 101.

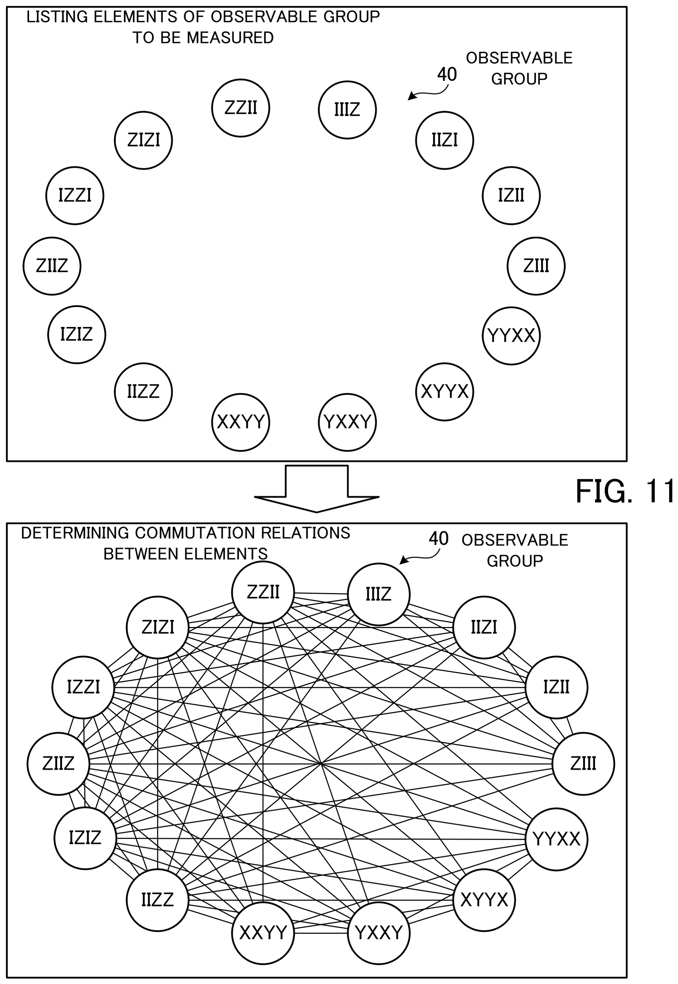

FIG. 11 illustrates an example of a process performed by the commutation relation determining unit 110. The commutation relation determining unit 110 enumerates observables that are elements of an observable group 40 to be measured. Each observable is represented as a Pauli string, which is a tensor product of Pauli operators. The commutation relation determining unit 110 determines the commutation relation for all pairs of two observables selected from the observable group 40. The commutation relation determining unit 110 stores information that associates pairs of observables that are determined to be commutative. In the example of FIG. 11, pairs of observables determined to be commutative are connected by lines. Observables not connected by a line have an anticommutation relation.

When the determination of commutation relations by the commutation relation determining unit 110 is completed, partitioning is performed by the partitioning unit 120. The partitioning unit 120 repeatedly performs processing to generate partitions, each of which includes as many observables as possible, for example.

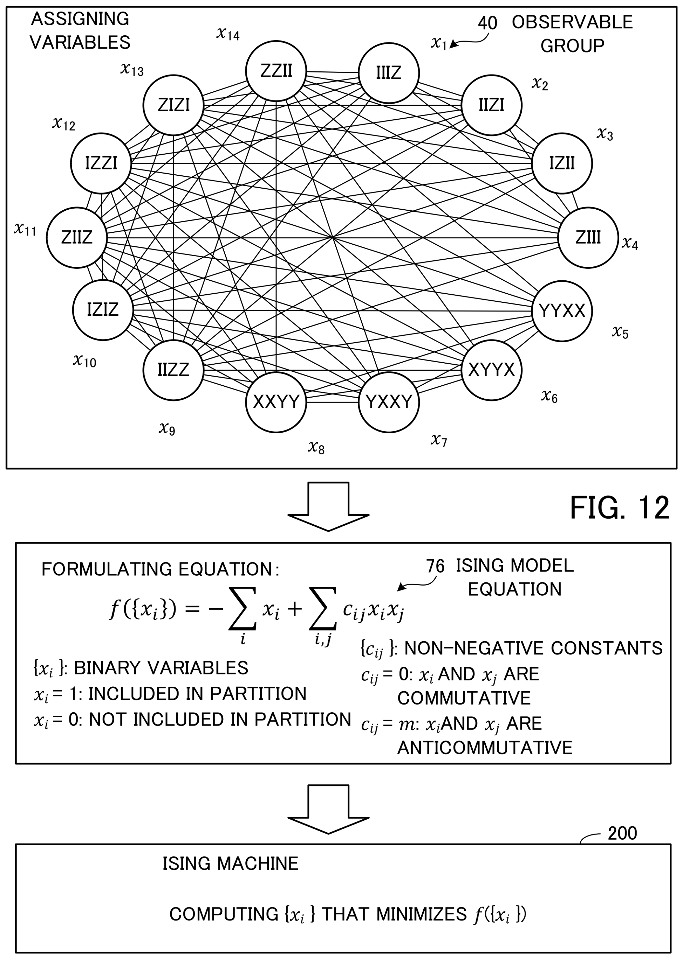

FIG. 12 illustrates an example of the partition generation processing. The partitioning unit 120 assigns variables $\{\chi_i\} = \{\chi_1, ..., \chi_{14}\}$ to each of the 14 observables in the observable group 40. The variables $\{\chi_i\}$ are binary variables. A value of $\chi_i = 1$ indicates that the corresponding observable is included in the partition, while a value of $\chi_i = 0$ indicates that the observable is not included in the partition.

The partitioning unit 120 generates an Ising model equation 76 using the variables $\{\chi_i\}$. The Ising model equation 76 is as follows:

$$f(\{x_i\}) = -\sum_i x_i + \sum_{i,j} c_{ij} x_i x_j \qquad (1)$$

In Equation (1), $f(\{\chi_i\})$ corresponds to a Hamiltonian. The first term on the right-hand side decreases as the number of indices i for which $\chi_i = 1$ increases. The constants $\{c_{ij}\}$ in the second term on the right-hand side are non-negative values representing commutation relations. If the i-th and j-th observables are in a commutation relation, then $c_{ij} = 0$. If the i-th and j-th observables are in an anticommutation relation, then $c_{ij} = m$ (where m is a positive real number).

If the value of m is too small, the likelihood of including a pair of anticommuting observables in the partition increases. The lower limit of m depends on the number of observables. For example, if the number of observables is around 10, the lower limit of m is approximately 0.25. If the number of observables is around 5,000, m may be set as low as approximately 0.05. Increasing the value of m contributes to faster convergence in the solution search. However, if m is too large, there is a risk that the solution search based on the Ising model equation 76 will become trapped in a local minimum. Therefore, if priority is given to computational accuracy, it is appropriate to set the value of m near its lower limit.

Accordingly, the second term on the right-hand side increases with the number of anticommuting observable pairs that are included in the partition. When $f(\{\chi_i\})$ reaches its minimum value in the Ising model equation 76 given in Equation (1), the second term on the right-hand side is expected to be zero.

The partitioning unit 120 causes the Ising machine 200 to calculate the variables $\{\chi_i\}$ that minimize $f(\{\chi_i\})$. Equation (1) is a combinatorial optimization problem for obtaining a combination of values of $\{\chi_i\}$ that minimizes $f(\{\chi_i\})$, and

is solved at high speed by using the Ising machine 200.

When the combination of $\chi_i = 1$ values obtained as a solution to the Ising model equation 76 includes a pair of observables in an anticommutation relation, the partitioning unit 120 may increase the value of m and instruct the Ising machine 200 to perform the calculation again.

Once the partitioning unit 120 generates one partition from an observable group $A_0$, the subset constituting the generated partition is designated as $B_0$. The partitioning unit 120 then removes the elements of $B_0$ from the observable group $A_0$ to obtain a new observable group $A_1 = A_0 \setminus B_0$ (where \ denotes the set difference), and generates another partition from $A_1$, designating the subset constituting the generated partition as $B_1$. Similarly, the partitioning unit 120 then removes the elements of $B_1$ from the observable group $A_1$ to obtain a new observable group $A_2 = A_1 \setminus B_1$, and generates another partition from $A_2$, designating the subset constituting the generated partition as $B_2$. In this way, the partitioning unit 120 repeatedly performs the partition generation process for subsets whose elements are observables not yet included in any partition. The partitioning unit 120 terminates the partitioning process when a new observable group $A_{n+1}$, obtained by removing the elements of $B_n$ from $A_n$ ($A_{n+1} = A_n \setminus B_n$), becomes an empty set.

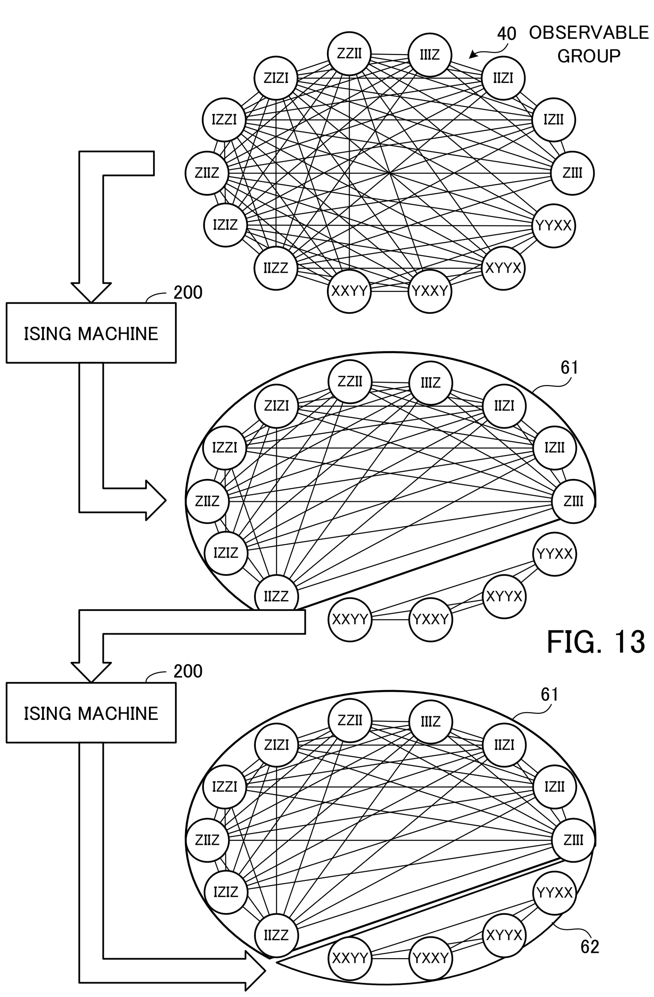

FIG. 13 illustrates an example of the repeated processing for partition generation. First, using all the observables in the observable group 40 as elements, the Ising machine 200 generates the partition 61 that includes the maximum number of elements based on the Ising model equation 76. For example, the Ising machine 200 returns $\{\chi_1, ..., \chi_{14}\}$ that minimizes $f(\{x_i\})$ in the Ising model equation 76. The observables corresponding to the elements whose values are equal to 1 in the returned $\{\chi_1, ..., \chi_{14}\}$ are included in the partition 61.

The partitioning unit 120 instructs the Ising machine 200 to generate a partition based on a subset consisting of the observables not included in the partition 61 as elements. In response to this instruction from the partitioning unit 120, the Ising machine 200 generates the partition 62 that includes the maximum number of elements.

In the example of FIG. 13, since all the observables are included in either of the two partitions 61 and 62, the partitioning is completed after the partition 62 is generated.

Once the partitioning is completed, the simultaneously measurable observable group generating unit 130 generates simultaneously measurable observable groups. For example, the simultaneously measurable observable group generating unit 130 extracts, for each generated partition, observables that are not included in the generated partition and that commute with all observables in the generated partition.

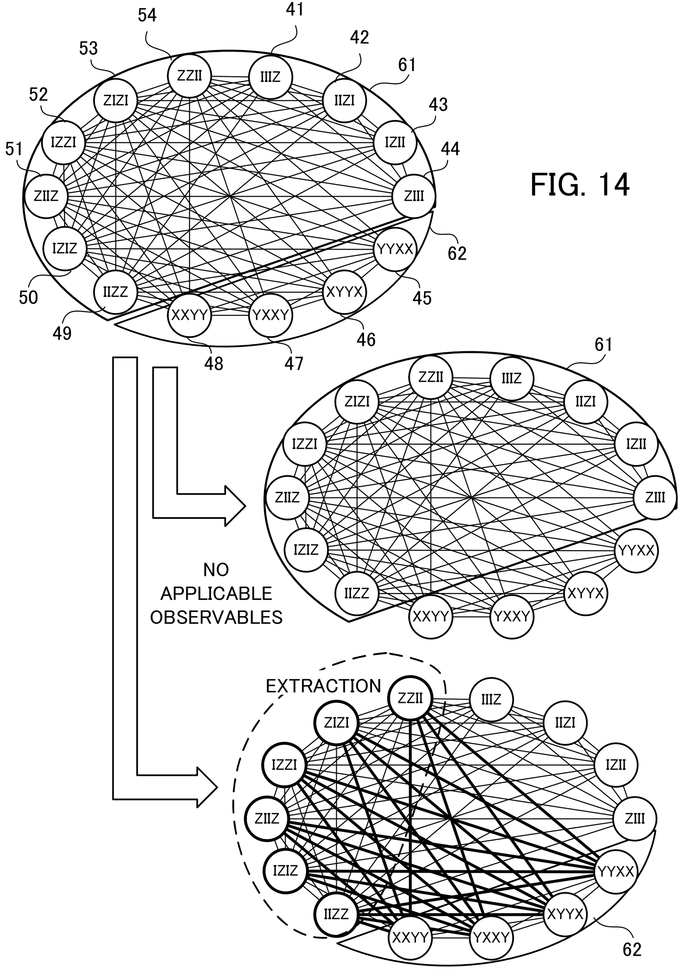

FIG. 14 illustrates an example of observable extraction from outside a partition. In the example of FIG. 14, there are no observables outside the partition 61 that commute with all observables in the partition 61. Therefore, no observables are extracted with respect to the partition 61. In this case, the simultaneous measurement observable group 63 (see FIG. 9) having the same observables as those in the partition 61 is generated.

On the other hand, with respect to the partition 62, there exist observables 49 to 54 outside the partition 62 that commute with all observables in the partition 62. Accordingly, these observables 49 to 54 are extracted. In this case, from the set of extracted observables 49 to 54, a subset of observables that are mutually commutative is extracted.

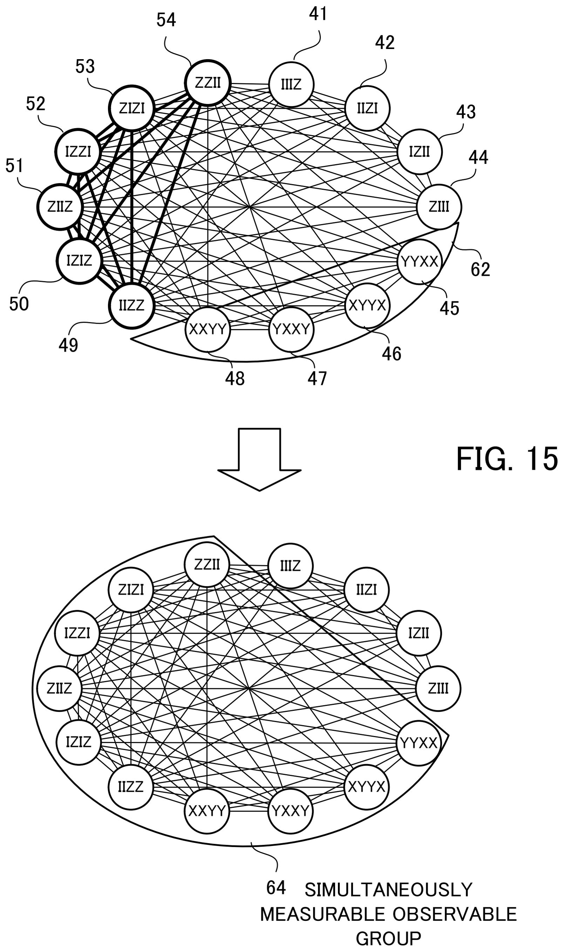

FIG. 15 illustrates an example of an extracted subset. In the example illustrated in FIG. 15, the observables 49 to 54 extracted in accordance with the partition 62 are all mutually commutative. Therefore, a subset including all the extracted observables 49 to 54 is extracted. The union of the extracted subset and the partition 62 then forms the simultaneously measurable observable group 64, which represents a set of observables to be simultaneously measured in a single quantum circuit.

The generated simultaneously measurable observable groups 63 and 64 are transmitted to the quantum circuit generating unit 140. The quantum circuit generating unit 140 generates a quantum circuit for each of the simultaneously measurable observable groups 63 and 64.

For example, the quantum circuit generating unit 140 stores, in association with each observable combination pattern that enables simultaneous measurement in a single quantum circuit, a quantum circuit for simultaneously measuring the expectation values of the observables included in the combination pattern. The quantum circuit generating unit 140 extracts, from among a set of pre-registered quantum circuits, a quantum circuit corresponding to each of the simultaneously measurable observable groups 63 and 64. The quantum circuit generating unit 140 generates a quantum circuit to be input to the gate-based quantum computer 300 by connecting, to the output side of a partial quantum circuit corresponding to the target problem, another partial quantum circuit corresponding to the combination of observables.

The quantum algorithm computing unit 150 transmits the quantum circuits generated for each combination of observables to the gate-based quantum computer 300. The gate-based quantum computer 300 performs measurement of qubit states according to the received quantum circuits. For example, the gate-based quantum computer 300 repeatedly performs measurements of the states of the qubits using the received quantum circuits. The gate-based quantum computer 300 counts the number of occurrences for each combination of qubit state values. The gate-based quantum computer 300 transmits the count values for each combination of qubit state values in the received quantum circuit to the classical computer 100.

The quantum algorithm computing unit 150 of the classical computer 100 computes the expectation value of each observable included in the simultaneously measurable observable group based on the count values for each combination of qubit state values.

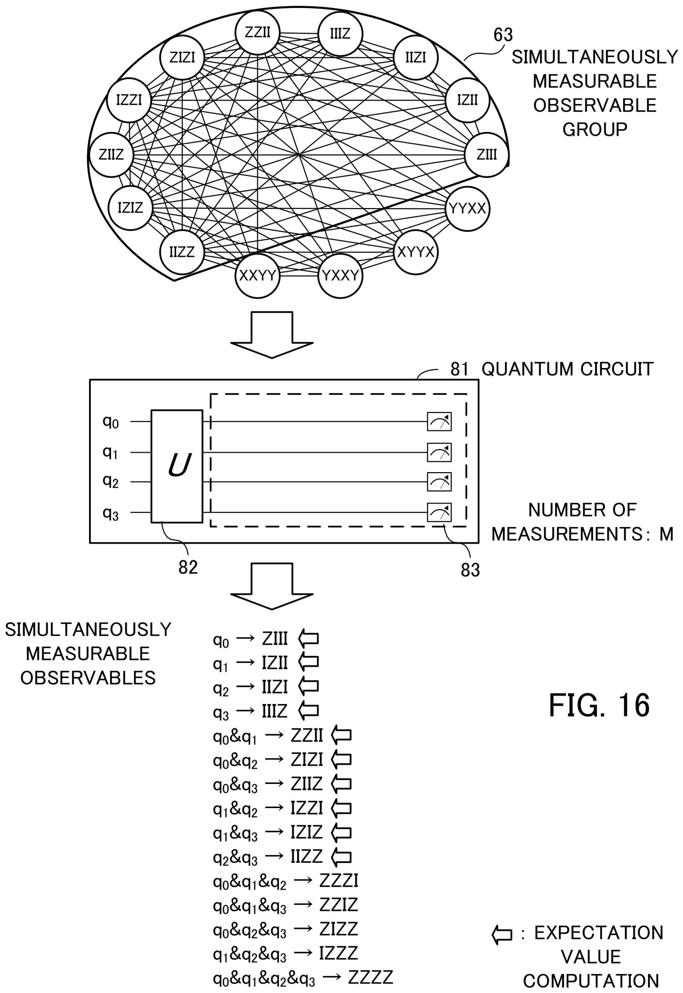

FIG. 16 illustrates a first example of expectation value computation for a simultaneously measurable observable group. In FIG. 16, a quantum circuit 81 that measures the expectation values of observables included in the simultaneously measurable observable group 63 is illustrated.

The quantum circuit 81 includes a partial quantum circuit 82 that performs operations according to the problem to be solved, and a partial quantum circuit 83, added on the output side of the partial quantum circuit 82, that performs operations for simultaneously measuring multiple observables. The partial quantum circuit 83 of the quantum circuit 81 is solely configured to perform the measurement of each of the four qubits. By executing the quantum circuit 81 on the gate-based quantum computer 300, count values indicating the frequency of occurrence for each combination pattern of measurement results of four qubits $q_0$, $q_1$, $q_2$, and $q_3$ are obtained as the result of the computation by the quantum circuit 81. The number of measurements using the quantum circuit 81 is assumed to be M.

Here, the combination patterns of measurement results are the 16 combinations of "0, 0, 0, 0", "0, 0, 0, 1" ..., "1, 1, 1, 1". The corresponding count values are denoted as "c0000, c0001, ..., c1111".

The quantum algorithm computing unit 150 computes the expectation values of the observables included in the simultaneously measurable observable group 63, based on the count values for each combination pattern of measurement results of the qubits $q_0$, $q_1$, $q_2$, and $q_3$.

In the quantum circuit 81, simultaneous measurement of 15 observables (i.e., $2^4$ - 1 observables) is possible. The simultaneously measurable observables are: "ZIII", "IZII" , "IIZI", "IIIZ", "ZZII", "ZIZI", "ZIIZ", "IZZI", "IZIZ", "IIZZ", "ZZZI", "ZZIZ", "ZIZZ", "IZZZ", and "ZZZZ". Among them, the observables included in the simultaneously measurable observable group 63 are: "ZIII", "IZII", "IIZI", "IIIZ", "ZZII", "ZIZI", "ZIIZ", "IZZI", "IZIZ", and "IIZZ".

The expectation value $<Z_0>$ of the observable "ZIII" is computed based on the measurement result of the qubit $q_0$. For example, the quantum algorithm computing unit 150 computes $<Z_0>$ as: $<Z_0>$ = ($c_{0000}$ + $c_{0001}$ + $c_{0010}$ + $c_{0011}$ + $c_{0100}$ + $c_{0101}$ + $c_{0110}$ + $c_{0111}$ - $c_{1000}$ - $c_{1001}$ - $c_{1010}$ - $c_{1011}$ - $c_{1100}$ - $c_{1101}$ - $c_{1110}$ - $c_{1111}$)/M.

The expectation value $<Z_1>$ of the observable "IZII" is computed based on the measurement result of the qubit $q_1$. For example, the quantum algorithm computing unit 150 computes $<Z_1>$ as: $<Z_1>$ = ($c_{0000}$ + $c_{0001}$ + $c_{0010}$ + $c_{0011}$ - $c_{0100}$ - $c_{0101}$ - $c_{0110}$ - $c_{0111}$ + C1000 + C1001 + C1010 + C1011 - C1100 - C1101 - C1110 - $c_{1111}$) /M.

The expectation value $<Z_2>$ of the observable "IIZI" is computed based on the measurement result of the qubit $q_2$. For example, the quantum algorithm computing unit 150 computes $<Z_2>$ as: $<Z_2>$ = ($c_{0000}$ + $c_{0001}$ - $c_{0010}$ - $c_{0011}$ + $c_{0100}$ + $c_{0101}$ - $c_{0110}$ - C0111 + $c_{1000}$ + $c_{1001}$ - C1010 - C1011 + C1100 + C1101 - C1110 - $c_{1111}$)/M.

The expectation value $<Z_3>$ of the observable "IIIZ" is computed based on the measurement result of the qubit $q_3$. For example, the quantum algorithm computing unit 150 computes $<Z_3>$ as: $<Z_3>$ = ($c_{0000}$ - $c_{0001}$ + $c_{0010}$ - $c_{0011}$ + $c_{0100}$ - $c_{0101}$ + $c_{0110}$ - $c_{0111}$ + C1000 - C1001 + C1010 - C1011 + C1100 - C1101 + C1110 - C1111) /M.

The expectation value $<Z_0Z_1>$ of the observable "ZZII" is computed based on the measurement results of the qubits $q_0$ and $q_1$ ($q_0$ & $q_1$). For example, the quantum algorithm computing unit 150 computes $<Z_0Z_1>$ as: $<Z_0Z_1>$ = ($c_{0000}$ + $c_{0001}$ + C0010 + $c_{0011}$ - $c_{0100}$ - $c_{0101}$ - $c_{0110}$ - $c_{0111}$ - C1000 - C1001 - C1010 - C1011 + C1100 + C1101 + C1110 + $c_{1111}$) /M.

The expectation value $<Z_0Z_2>$ of the observable "ZIZI" is computed based on the measurement results of the qubits $q_0$ and $q_2$ ($q_0$ & $q_2$). For example, the quantum algorithm computing unit 150 computes $<Z_0Z_2>$ as: $<Z_0Z_2>$ = ($c_{0000}$ + $c_{0001}$ - C0010 - $c_{0011}$ + $c_{0100}$ + $c_{0101}$ - $c_{0110}$ - $c_{0111}$ - C1000 - C1001 + C1010 + C1011 - C1100 - C1101 + C1110 + C1111) /M.

The expectation value $<Z_0Z_3>$ of the observable "ZIIZ" is computed based on the measurement results of the qubits $q_0$ and $q_3$ ($q_0$ & $q_3$). For example, the quantum algorithm computing unit 150 computes $<Z_0Z_3>$ as: $<Z_0Z_3>$ = ($c_{0000}$ - $c_{0001}$ + $c_{0010}$ - $c_{0011}$ + $c_{0100}$ - $c_{0101}$ + $c_{0110}$ - $c_{0111}$ - C1000 + C1001 - C1010 + C1011 - C1100 + C1101 - $c_{1110}$ + C1111) /M.

The expectation value $<Z_1Z_2>$ of the observable "IZZI" is computed based on the measurement results of the qubits $q_1$ and $q_2$ ($q_1$ & $q_2$). For example, the quantum algorithm computing unit 150 computes $<Z_1Z_2>$ as: $<Z_1Z_2>$ = ($c_{0000}$ + $c_{0001}$ - $c_{0010}$ - $c_{0011}$ - $c_{0100}$ - $c_{0101}$ + $c_{0110}$ + $c_{0111}$ + $c_{1000}$ - $c_{1001}$ - $c_{1010}$ - C1011 - C1100 - $c_{1101}$ + C1110 + C1111) /M.

The expectation value $<Z_1Z_3>$ of the observable "IZIZ" is computed based on the measurement results of the qubits $q_1$ and $q_3$ ($q_1$ & $q_3$). For example, the quantum algorithm computing unit 150 computes $<Z_1Z_3>$ as: $<Z_1Z_3>$ = ($c_{0000}$ - $c_{0001}$ + C0010 - $c_{0011}$ - $c_{0100}$ + $c_{0101}$ - $c_{0110}$ + $c_{0111}$ + $c_{1000}$ - C1001 + C1010 - $c_{1011}$ - $c_{1100}$ + $c_{1101}$ - $c_{1110}$ + $c_{1111}$)/M.

The expectation value $<Z_2Z_3>$ of the observable "IIZZ" is computed based on the measurement results of the qubits $q_2$ and $q_3$ ($q_2$ & $q_3$). For example, the quantum algorithm computing unit 150 computes $<Z_2Z_3>$ as: $<Z_2Z_3>$ = ($c_{0000}$ - $c_{0001}$ - $c_{0010}$ + $c_{0011}$ + $c_{0100}$ - $c_{0101}$ - $c_{0110}$ + $c_{0111}$ + C1000 - C1001 - C1010 + C1011 + C1100 - C1101 - C1110 + $c_{1111}$)/M.

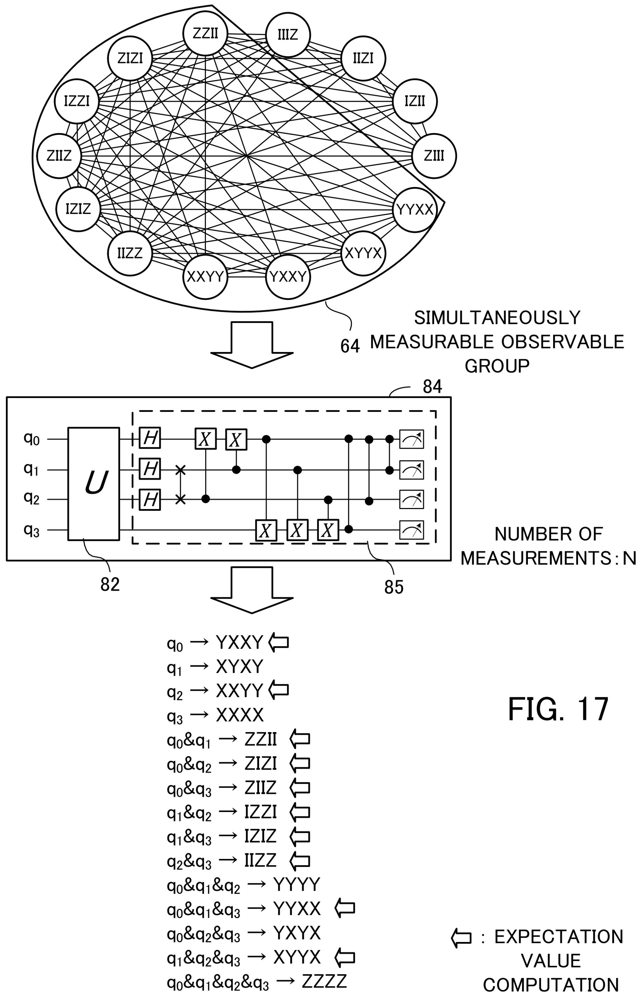

FIG. 17 illustrates a second example of the expectation value computation for a group of simultaneously measurable observables. In FIG. 17, a quantum circuit 84 that performs measurements to obtain the expectation values of observables included in the simultaneously measurable observable group 64 is illustrated. The quantum circuit 84 includes a partial quantum circuit 82, which is the same as that in the quantum circuit 81 (see FIG. 16), and a partial quantum circuit 85 that transforms the values of predetermined observables into values along the Z-axis. In the partial quantum circuit 85, the observables "YXXY", "XYXY", "XXYY", and "XXXX" are the targets of measurement after the gate operations performed by the partial quantum circuit 82. After the gate operations by the partial quantum circuit 85, the state of the qubit $q_0$ corresponds to the observable "YXXY". The state of the qubit $q_1$ corresponds to the observable "XYXY". The state of the qubit $q_2$ corresponds to the observable "XXYY". The state of the qubit $q_3$ corresponds to the observable "XXXX".

The quantum algorithm computing unit 150 computes the expectation values of the observables included in the simultaneously measurable observable group 64, based on the count values corresponding to each combination pattern of measurement results for the qubits $q_0$, $q_1$, $q_2$, and $q_3$. The number of measurements performed using the quantum circuit 84 is assumed to be N.

In the quantum circuit 84, simultaneous measurement of 15 observables (i.e., $2^4 - 1$ observables) is possible. The simultaneously measurable observables are: "YXXY", "XYXY", "XXYY", "XXXX", "ZZII", "ZIZI", "ZIIZ" , "IZZI" , "IZIZ", "IIZZ", "YYYY", "YYXX", "YXYX", "XYYX", and "ZZZZ". Among these, the observables included in the simultaneously measurable observable group 64 are "YXXY", "XXYY", "ZZII", "ZIZI", "ZIIZ", "IZZI", "IZIZ", "IIZZ", "YYXX", and "XYYX". Therefore, the quantum algorithm computing unit 150 computes the expectation values of "YXXY", "XXYY", "ZZII", "ZIZI", "ZIIZ", "IZZI", "IZIZ", "IIZZ", "YYXX", and "XYYX".

The expectation value $<Y_0X_1X_2Y_3>$ of the observable "YXXY" is computed based on the measurement results of the qubit $q_0$. For example, the quantum algorithm computing unit 150 computes $<Y_0X_1X_2Y_3>$ as follows: $<Y_0X_1X_2Y_3>$ = - $(c_{0000} + c_{0001} + c_{0010} + c_{0011} + c_{0100} + c_{0101} + c_{0110} + c_{0111} - c_{1000} - c_{1001} - c_{1010} - C1011 - C1100 - C1101 - C1110 - c_{1111})/N$.

The expectation value $<X_0X_1Y_2Y_3>$ of the observable "XXYY" is computed based on the measurement results of the qubit $q_2$. For example, the quantum algorithm computing unit 150 computes $<X_0X_1Y_2Y_3>$ as follows: $<X_0X_1Y_2Y_3>$ = $-(c_{0000} + c_{0001} - c_{0010} - c_{0011} + c_{0100} + c_{0101} - c_{0110} - c_{0111} + C1000 + C1001 - C1010 - C1011 + C1100 + C1101 - C1110 - c_{1111})/N$.

The expectation value $<Z_0Z_1>$ of the observable "ZZII" is computed based on the measurement results of the qubit $q_0$ and the qubit $q_1$ ($q_0$ & $q_1$). For example, the quantum algorithm computing unit 150 computes $<Z_0Z_1>$ as follows: $<Z_0Z_1>$ = $(c_{0000} + c_{0001} + c_{0010} + c_{0011} - c_{0100} - c_{0101} - c_{0110} - c_{0111} - c_{1000} - C1001 - C1010 - C1011 + C1100 + C1101 + C1110 + c_{1111})/N$.

The expectation value $<Z_0Z_2>$ of the observable "ZIZI" is computed based on the measurement results of the qubit $q_0$ and the qubit $q_2$ ($q_0$ & $q_2$). For example, the quantum algorithm computing unit 150 computes $<Z_0Z_2>$ as follows: $<Z_0Z_2>$ = $(c_{0000} + c_{0001} - c_{0010} - c_{0011} + c_{0100} + 0101 - c_{0110} - c_{0111} - C1000 - C1001 + C1010 + C1011 - C1100 - C1101 + C1110 + C1111) /N$.

The expectation value $<Z_0Z_3>$ of the observable "ZIIZ" is computed based on the measurement results of the qubit $q_0$ and the qubit $q_3$ ($q_0$ & $q_3$). For example, the quantum algorithm computing unit 150 computes $<Z_0Z_3>$ as follows: $<Z_0Z_3>$ = $(c_{0000} - c_{0001} + c_{0010} - c_{0011} + c_{0100} - c_{0101} + c_{0110} - c_{0111} - c_{1000} + c_{1001} - C1010 + C1011 - c_{1100} + C1101 - C1110 + C1111) /N$.

The expectation value $<Z_1Z_2>$ of the observable "IZZI" is computed based on the measurement results of the qubit $q_1$ and the qubit $q_2$ ($q_1$ & $q_2$). For example, the quantum algorithm computing unit 150 computes $<Z_1Z_2>$ as follows: $<Z_1Z_2>$ = $(c_{0000} + c_{0001} - c_{0010} - c_{0011} - c_{0100} - c_{0101} + c_{0110} + c_{0111} + C1000 - C1001 - C1010 - C1011 - C1100 - C1101 + C1110 + c_{1111})/N$.

The expectation value $<Z_1Z_3>$ of the observable "IZIZ" is computed based on the measurement results of the qubit $q_1$ and the qubit $q_3$ ($q_1$ & $q_3$). For example, the quantum algorithm computing unit 150 computes $<Z_1Z_3>$ as follows: $<Z_1Z_3>$ = $(c_{0000} - c_{0001} + c_{0010} - c_{0011} - c_{0100} + c_{0101} - c_{0110} + c_{0111} + c_{1000} - c_{1001} + C1010 - C1011 - C1100 + C1101 - C1110 + c_{1111})/N$.

The expectation value $<Z_2Z_3>$ of the observable "IIZZ" is computed based on the measurement results of the qubit $q_2$ and the qubit $q_3$ ($q_2$ & $q_3$). For example, the quantum algorithm computing unit 150 computes $<Z_2Z_3>$ as follows: $<Z_2Z_3>$ = $(c_{0000} - c_{0001} - c_{0010} + c_{0011} + c_{0100} - c_{0101} - c_{0110} + c_{0111} + c_{1000} - c_{1001} - C1010 + C1011 + C1100 - C1101 - C1110 + c_{1111})/N$.

The expectation value $<Y_0Y_1X_2X_3>$ of the observable "YYXX" is computed based on the measurement results of the qubit $q_0$, the qubit $q_1$, and the qubit $q_3$ ($q_0$ & $q_1$ & $q_3$). For example, the quantum algorithm computing unit 150 computes $<Y_0Y_1X_2X_3>$ as follows: $<Y_0Y_1X_2X_3>$ = - $(c_{0000} - c_{0001} + c_{0010} + c_{0011} - c_{0100} + c_{0101} - c_{0110} + c_{0111} - C1000 + C1001 - C1010 + C1011 + C1100 - C1101 + C1110 - c_{1111})/N$.

The expectation value $<X_0Y_1Y_2X_3>$ of the observable "XYYX" is computed based on the measurement results of the qubit $q_1$, the qubit $q_2$, and the qubit $q_3$ ($q_1$ & $q_2$ & $q_3$). For example, the quantum algorithm computing unit 150 computes $<X_0Y_1Y_2X_3>$ as follows: $<X_0Y_1Y_2X_3>$ = - $(c_{0000} - c_{0001} - c_{0010} + c_{0011} - c_{0100} + c_{0101} + c_{0110} - c_{0111} + c_{1000} - c_{1001} - c_{1010} + c_{1011} - c_{1100} + c_{1101} + c_{1110} - c_{1111})/N$.

As illustrated in FIGS. 16 and 17, the expectation values of ten observables are computed based on the results of quantum computation using the quantum circuit 81, and the expectation values of ten observables are computed based on the results of quantum computation using the quantum circuit 84. For some of the observables, the expectation values are computed using both the quantum circuit 81 and the quantum circuit 84, thereby improving the accuracy of the computed expectation values.

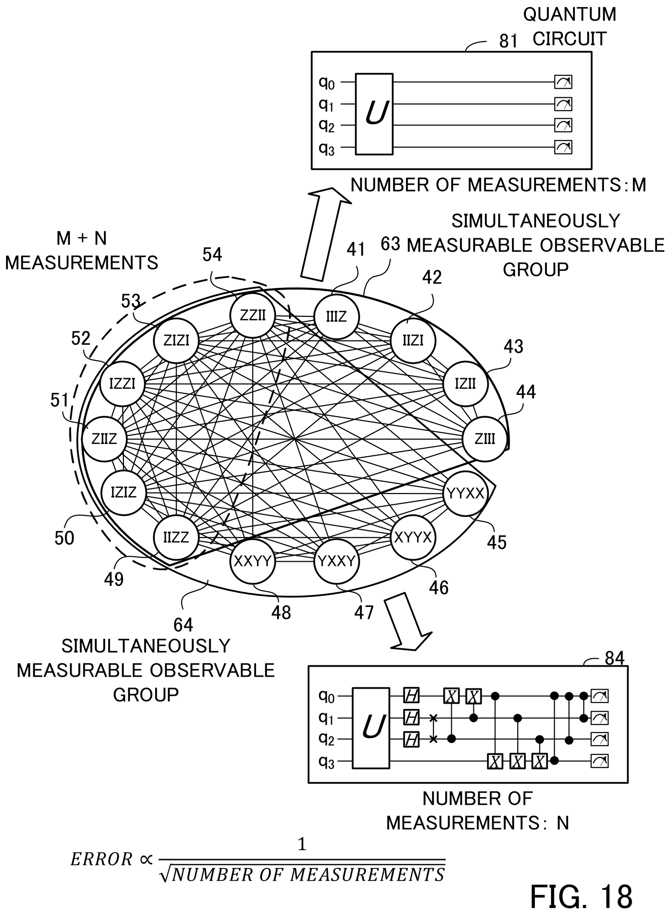

FIG. 18 illustrates an example in which the accuracy of expectation values is improved by increasing the number of measurements. Among the observables 41 to 54 to be measured, the observables 49 to 54 are measured using both the quantum circuit 81 and the quantum circuit 84. Since the number of measurements using the quantum circuit 81 is M and the number of measurements using the quantum circuit 84 is N, the observables 49 to 54 are each measured M + N times.

The error in the expectation value of each of the observables depends on the number of measurements. For example, the error is inversely proportional to the square root of the number of measurements. In other words, the error is expressed by the formula "error $\alpha$ 1/(number of measurements)$^{1/2}$". Since the observables 49 to 54 are each measured a total of M + N times, the errors become smaller accordingly. That is, the accuracy of each expectation value is improved.

The expectation values of the observables 49 through 54 are computed based on the count values for the occurrence patterns of the combinations of qubit state values measured by the quantum circuits 81 and 84, respectively. For example, the quantum algorithm computing unit 150 counts the number of occurrences (count values), among the results obtained by the quantum circuit 81, in which the number of qubits having a measurement result of 1 among the target qubits is even. Similarly, the quantum algorithm computing unit 150 counts the number of occurrences, among the results obtained by the quantum circuit 84, in which the number of qubits having a measurement result of 1 among the target qubits is even. The quantum algorithm computing unit 150 then adds the count values corresponding to the results from both quantum circuits 81 and 84 in which the number of qubits having a measurement result of 1 among the target qubits is even.

Furthermore, the quantum algorithm computing unit 150 counts the number of occurrences, among the results obtained by the quantum circuit 81, in which the number of qubits having a measurement result of 1 among the target qubits is odd. Similarly, the quantum algorithm computing unit 150 counts the number of occurrences, among the results obtained by the quantum circuit 84, in which the number of qubits having a measurement result of 1 among the target qubits is odd. The quantum algorithm computing unit 150 then adds the count values corresponding to the results from both quantum circuits 81 and 84 in which the number of qubits having a measurement result of 1 among the target qubits is odd.

The quantum algorithm computing unit 150 subtracts the total count values in which the number of qubits having a measurement result of 1 among the target qubits is odd from the total count values in which the number of qubits having a measurement result of 1 among the target qubits is even. The quantum algorithm computing unit 150 then divides the resulting difference by the sum of the number of measurements obtained by the quantum circuits 81 and 84. The result of the division corresponds to the expectation value.

In the following description, the count values obtained from the measurement results of the quantum circuit 81 are denoted with the superscript "A". The count values obtained from the measurement results of the quantum circuit 84 are denoted with the superscript "B".

For example, the expectation value $<Z_0Z_1>$ of the observable 54 represented by "ZZII" is computed using the following expression.

$$<Z_0Z_1> = (c^A_{0000} + c^A_{0001} + c^A_{0010} + c^A_{0011} - c^A_{0100} - c^A_{0101} - c^A_{0110} - c^A_{0111} - c^A_{1000} - c^A_{1001} - c^A_{1010} - c^A_{1011} + c^A_{1100}$$
$$+ c^A_{1101} + c^A_{1110} + c^A_{1111} + c^B_{0000} + c^B_{0010} + c^B_{0010} + c^B_{0011} - c^B_{0100} - c^B_{0101} - c^B_{0110} - c^B_{0111} - c^B_{0010} - c^B_{1001} - c^B_{0010}$$
$$- c^B_{1011} + c^B_{1100} + c^B_{1101} + c^B_{1110} + c^B_{1111})/(M + N)$$

Similarly, the expectation value $<Z_0Z_3>$ of the observable 51 represented by "ZIIZ" is computed using the following expression.

$$<Z_0Z_3> = (c^A_{0000} - c^A_{0001} + c^A_{0010} - c^A_{0011} + c^A_{0100} - c^A_{0101} + c^A_{0110} - c^A_{0111} - c^A_{1000} + c^A_{1001} - c^A_{1010} + c^A_{1011} - c^A_{1100}$$
$$+ c^A_{1101} - c^A_{1110} + c^A_{1111} + c^B_{0000} - c^B_{0001} + c^B_{0010} - c^B_{0011} + c^B_{0010} - c^B_{0101} + c^B_{0110} - c^B_{0111} - c^B_{1000} + c^B_{1001} - c^B_{0010}$$
$$+ c^B_{0010} - c^B_{1100} + c^B_{1101} - c^B_{1110} + c^B_{1111})/(M + N)$$

In this manner, the number of measurements for each observable is increased, thereby improving the accuracy. Even if only some of the observables are measurable with multiple quantum circuits, improving the measurement accuracy of the expectation values of those observables contributes to enhancing the accuracy of the solution to the problem targeted by the quantum algorithm.

The quantum algorithm computation processing will be described in detail below.

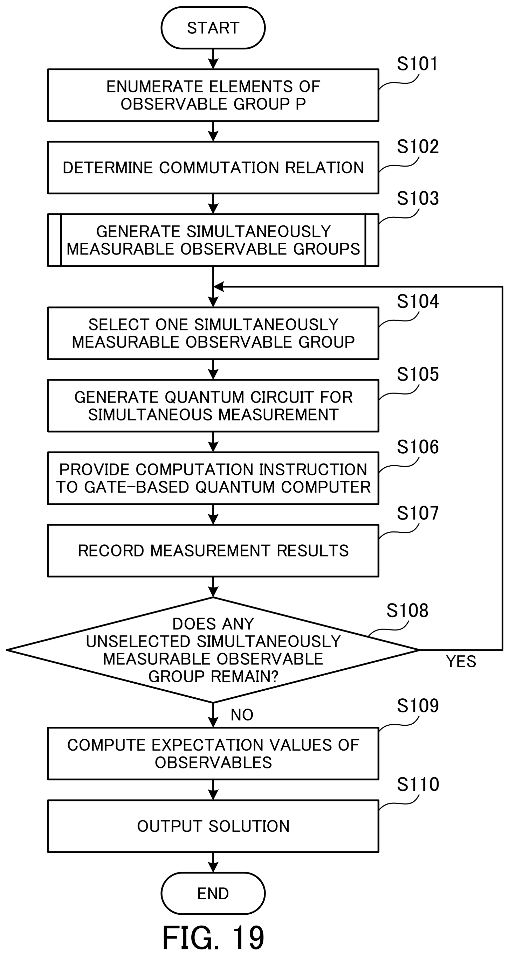

FIG. 19 is a flowchart illustrating an example of the procedure for the quantum algorithm computation processing. The processing illustrated in FIG. 19 will be described below in accordance with the step numbers.

[Step S101] The commutation relation determining unit 110 enumerates the observables that are elements of an observable group P to be measured, in accordance with the problem to be solved.

[Step S102] The commutation relation determining unit 110 determines the commutation relations among the observables included as elements in the observable group. For example, the commutation relation determining unit 110 generates all combinations (observable pairs) of two observables selected from among those included as elements in the observable group. Then, for each observable pair, the commutation relation determining unit 110 determines whether the pair of observables is commutative or anticommutative, based on the commutative or anticommutative relation between the Pauli operators included in the observables.

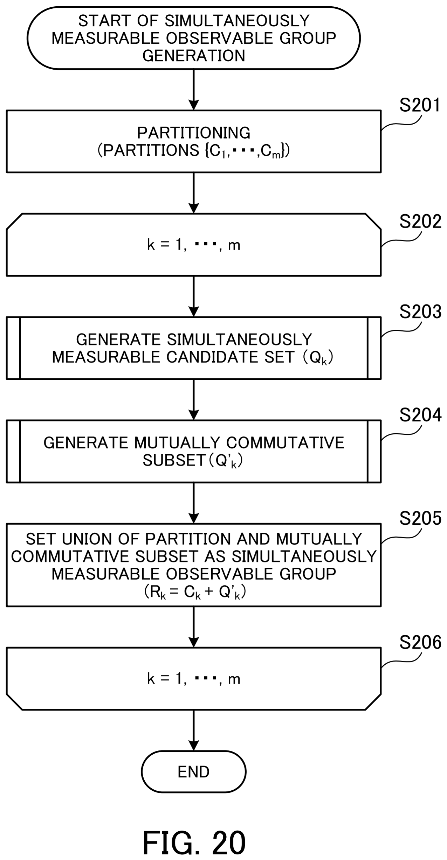

[Step S103] The partitioning unit 120 and the simultaneously measurable observable group generating unit 130 work together to generate simultaneously measurable observable groups. Details of the simultaneously measurable observable group generation processing will be described later (see FIG. 20).

[Step S104] The quantum circuit generating unit 140 selects one of the simultaneously measurable observable groups that has not yet been selected.

[Step S105] The quantum circuit generating unit 140 generates a quantum circuit for simultaneously measuring the observables included in the selected simultaneously measurable observable group.

[Step S106] The quantum algorithm computing unit 150 transmits the quantum circuit to the gate-based quantum computer 300 and instructs the gate-based quantum computer 300 to perform the computation in accordance with the quantum circuit. The gate-based quantum computer 300 performs the computation according to the quantum circuit a predetermined number of times, and counts the number of occurrences (count values) for each combination of measurement results of qubits corresponding to the respective observables selected. The gate-based quantum computer 300 then transmits the count values for each combination of measurement results of the qubits to the quantum algorithm computing unit 150.

[Step S107] The quantum algorithm computing unit 150 stores the measurement results obtained from the gate-based quantum computer 300 in the memory 102.

[Step S108] The quantum circuit generating unit 140 determines whether any unselected simultaneously measurable observable group remains. If any unselected simultaneously measurable observable group remains, the quantum circuit generating unit 140 proceeds to step S104. If no unselected group remains, the quantum circuit generating unit 140 proceeds to step S109.

[Step S109] The quantum algorithm computing unit 150 computes the expectation value of each observable.

[Step S110] The quantum algorithm computing unit 150 computes the solution to the problem to be solved, using the expectation values of the observables, and outputs the computed solution.

Next, the simultaneously measurable observable group generation processing will be described in detail.

FIG. 20 is a flowchart illustrating an example of the procedure for the simultaneously measurable observable group generation processing. The processing illustrated in FIG. 20 will be described below in accordance with the step numbers.

[Step S201] The partitioning unit 120 performs partitioning of the group of observables to be measured. Through this partitioning, one or more partitions $\{C_1, ..., C_m\}$ are generated (where m is a natural number indicating the number of partitions).

[Step S202] The simultaneously measurable observable group generating unit 130 performs the processing of steps S203 to S205 for each generated partition. For example, the simultaneously measurable observable group generating unit 130 increments a variable k (k is an integer from 1 to m) and generates a simultaneously measurable observable group $R_k$ for the k-th partition $C_k$.

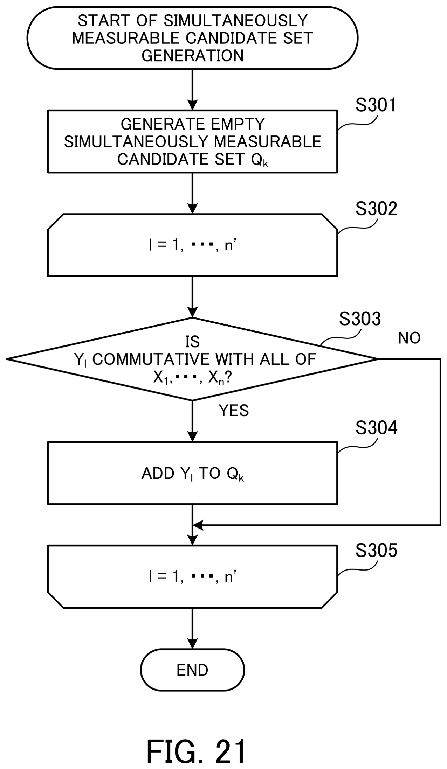

[Step S203] The simultaneously measurable observable group generating unit 130 performs generation processing for a simultaneously measurable candidate set $Q_k$. For example, the simultaneously measurable observable group generating unit 130 selects, from among the observables in a complement set $(P - C_k)$ of the partition $C_k$ under processing, those observables that are commutative with each of the observables included in the partition $C_k$ as simultaneously measurable candidates. The simultaneously measurable observable group generating unit 130 includes these candidates in the simultaneously measurable candidate set $Q_k$. Details of the simultaneously measurable candidate set generation processing are described later (see FIG. 21).

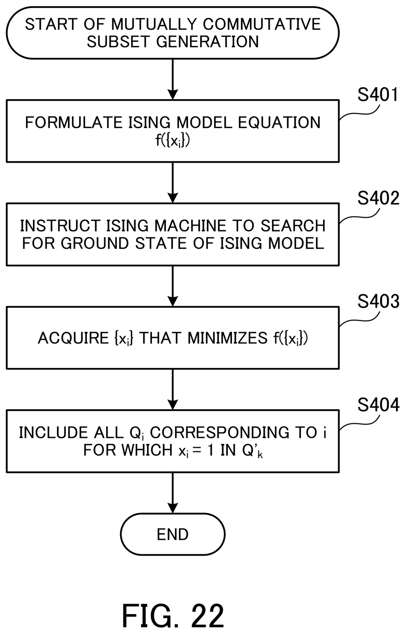

[Step S204] The simultaneously measurable observable group generating unit 130 generates, from the simultaneously measurable candidate set $Q_k$, a set of mutually commutative observables that contains the maximum number of observables (mutually commutative subset $Q'_k$). The details of the mutually commutative subset $Q'_k$ generation processing will be described later (see FIG. 22).

[Step S205] The simultaneously measurable observable group generating unit 130 sets the union of the partition $C_k$ and the mutually commutative subset $Q'_k$ as the simultaneously measurable observable group $R_k$ ($R_k = C_k + Q'_k$).

[Step S206] The simultaneously measurable observable group generating unit 130 ends the simultaneously measurable observable group generation processing after completing the processing of steps S203 to S205 for all partitions.

Next, the simultaneously measurable candidate set generation processing will be described in detail.

FIG. 21 is a flowchart illustrating an example of the procedure for the simultaneously measurable candidate set generation processing. The processing illustrated in FIG. 21 will be described below in accordance with the step numbers. In the following description, the observables included in the partition $C_k$ to be processed are denoted as $\{X_1, ..., X_n\}$, where n is a natural number representing the number of observables in the partition Ck. The observables included in the complement set of the partition $C_k$ $(P - C_k)$ are denoted as $\{Y_1, ..., Y_{n'}\}$, where n' is a natural number representing the number of observables in the complement set $(P - C_k)$.

[Step S301] The simultaneously measurable observable group generating unit 130 generates an empty simultaneously measurable candidate set $Q_k$.

[Step S302] The simultaneously measurable observable group generating unit 130 performs the processing of steps S303 to S304 for each of the observables $\{Y_1, ..., Y_{n'}\}$ included in the complement set of the partition Ck (P - Ck) to be processed.

[Step S303] The simultaneously measurable observable group generating unit 130 determines whether the observable $Y_l$ to be processed is commutative with all of the observables $\{X_1, ..., X_n\}$ included in the partition $C_k$. If the observable YI is commutative with all observables in the partition $C_k$, the processing proceeds to step S304. If the observable $Y_l$ is anticommutative with at least one of the observables in the partition $C_k$, the processing proceeds to step S305.

[Step S304] The simultaneously measurable observable group generating unit 130 adds the observable $Y_l$ to be processed to the simultaneously measurable candidate set $Q_k$.

[Step S305] After completing the processing of Steps S303 to S304 for all observables included in the complement set of the partition $C_k$ (P - $C_k$), the simultaneously measurable observable group generating unit 130 ends the simultaneously measurable candidate set generation processing.

Next, a detailed description will be given of the mutually commutative subset generation processing based on the simultaneously measurable candidate set $Q_k$.

FIG. 22 is a flowchart illustrating an example of the procedure for the mutually commutative subset generation processing. The processing illustrated in FIG. 22 will be described below in accordance with the step numbers. In the following description, the observables included in the simultaneously measurable candidate set $Q_k$ are denoted as $\{Q_1, ..., Q_r\}$, where r is a natural number representing the number of observables included in the simultaneously measurable candidate set $Q_k$.

[Step S401] The simultaneously measurable observable group generating unit 130 formulates an Ising model equation $f(\{x_i\})$ (i = 1, ..., r) for generating a mutually commutative subset $Q'_k$. This Ising model equation is formulated such that the more observables included in the mutually commutative subset $Q'_k$, the smaller the value of the equation becomes. Each $x_i$ is a variable indicating whether the observable Q_i is included in the mutually commutative subset $Q'_k$. For example, when the observable Q_i is included in the mutually commutative subset $Q'_k$, $x_i = 1$. When the observable Q_i is not included in the mutually commutative subset $Q'_k$, $x_i = 0$.

[Step S402] The simultaneously measurable observable group generating unit 130 instructs the Ising machine 200 to search for the ground state of the Ising model equation formulated in step S401. The Ising machine 200 computes the values of $\{x_i\}$ that result in the ground state (minimum value) of the Ising model equation in accordance with the instruction.

[Step S403] The simultaneously measurable observable group generating unit 130 acquires, from the Ising machine 200, the values of $\{x_i\}$ that minimize the Ising model equation (i.e., correspond to the ground state).

[Step S404] The simultaneously measurable observable group generating unit 130 includes, in the mutually commutative subset $Q'_k$, all observables $Q_i$ corresponding to i for which $x_i = 1$.

Through the processing illustrated in FIGS. 20 to 22, the simultaneously measurable observable groups are generated. Then, using quantum circuits corresponding to each generated simultaneously measurable observable group, the expectation values of the observables included in each simultaneously measurable observable group are computed. Since the observables included in multiple simultaneously measurable observable groups are measured multiple times, the number of measurements increases, thereby improving the accuracy of the expectation values.

Next, a specific example of an Ising model equation for generating the mutually commutative subset $Q'_k$ will be described.

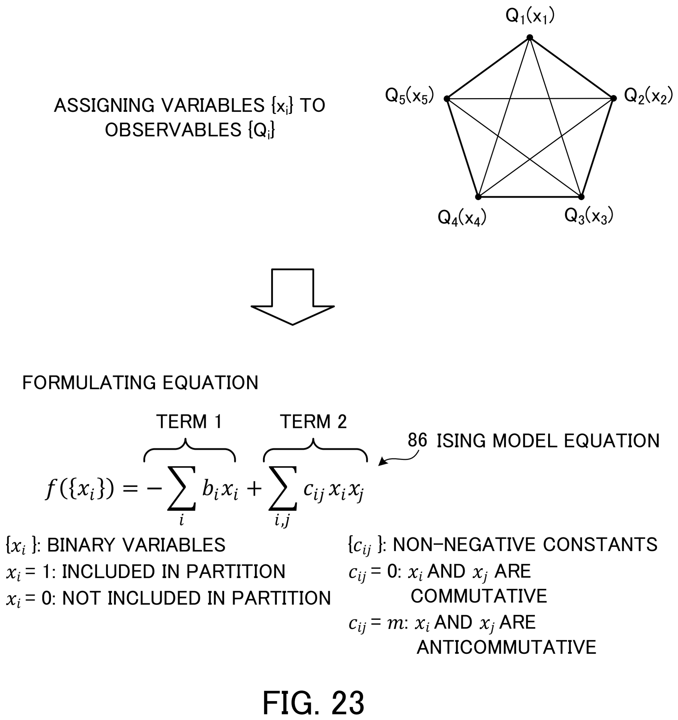

FIG. 23 illustrates an example of an Ising model equation for generating the mutually commutative subset. The simultaneously measurable observable group generating unit 130 assigns a variable $\{x_i\}$ to each observable $\{Q_i\}$ included in the simultaneously measurable candidate set $Q_k$. If the observable $Q_i$ is included in the mutually commutative subset $Q'_k$, the corresponding value of $x_i$ is set to 1. If the observable $Q_i$ is not included in the mutually commutative subset $Q'_k$, the value of $x_i$ is set to 0. The Ising model equation 86 in this case is represented, for example, by Equation (2).

$$f(\{x_i\}) = -\sum_i b_i x_i + \sum_{i,j} c_{ij} x_i x_j \qquad (2)$$

As in Equation (1), $\{c_{ij}\}$ are non-negative constants, where $c_{ij} = 0$ if $Q_i$ and $Q_j$ are commutative, and $c_{ij} = m$ (m > 1) if $Q_i$ and $Q_j$ are anticommutative. In Equation (2), the more observables for which $x_i = 1$, the smaller the value of the first term becomes. On the other hand, if any pair of observables with $x_i = 1$ are in an anticommutative relation (i.e., $c_{ij} = m$), then the value of the second term increases.

The variable $b_i$ represents the weight for each observable. The value of $b_i$ may be determined in accordance with the problem to be solved. For example, when all observables are intended to have the same level of accuracy, the values may be uniformly set as $b_1 = b_2 = ... = b_r$.

The value m of $c_{ij}$ is set to be greater than the maximum value of $b_i$. Preferably, the value of m is no more than twice the maximum value of $b_i$.

In some cases, the solution to the problem to be solved is the expectation value of a physical quantity H expressed as a linear combination of observables. For example, when the expectation values of the observables $\{Q_1, ..., Q_r\}$ included in the simultaneously measurable candidate set $Q_k$ are denoted by $\{P_1, ..., P_r\}$, the expectation value H is expressed by the following equation.

$$H = \lambda_1 P_1 + \lambda_2 P_2 + \ldots + \lambda_r P_r$$

Here, $\lambda_i$ (i = 1, 2, ..., r) is a coefficient multiplied by an expectation value $P_i$ of the observable $Q_i$. The larger the absolute value of the corresponding coefficient $\lambda_i$, the greater the impact that an error in the expectation value $P_i$ of the observable $Q_i$ has on the error in the physical quantity H. In such a case, for example, the simultaneously measurable observable group generating unit 130 increases the value of $b_i$ corresponding to an observable $Q_i$ having a larger absolute value of the coefficient $\lambda_i$. For example, if $|\lambda_1| \geq |\lambda_2| \geq ... \geq |\lambda_r|$, then the values are set such that $|b_1| \geq |b_2| \geq ... \geq |b_r|$.

The larger the value of $b_i$ for an observable $Q_i$, the more likely $Q_i$ is to be included in the mutually commutative subset $Q'_k$, and the number of measurements for $Q_i$ is expected to increase. If the number of measurements for observables $Q'_i$ with large absolute values of the coefficients $\lambda_i$ increases, the measurement accuracy improves, thereby reducing the error in the expectation value H.

For example, when $|\lambda|_{max} = \max(|\lambda_1|, ..., |\lambda_r|)$, $b_i$ is represented by the following equation (3):

$$b_i = \left\lceil \frac{|\lambda_i|}{|\lambda|_{max}} \times M \right\rceil \qquad (3)$$

The constant M is a natural number that satisfies, for example, $c_{ij} = 2M$ (e.g., $10^5$). In the right-hand side of Equation (3), a ceiling function is used to obtain the smallest integer not less than "$(|\lambda_i|/|\lambda|_{max}) \times M$".

In Equation (3), $b_i$ is a value proportional to $\lambda_i$. As $b_i$ needs to be an integer when computed using the Ising machine 200, the ceiling function is used to ensure that bi is an integer in Equation (3). If $b_i$ is not restricted to integers and may take real (non-integer) values, the ceiling function in Equation (3) may be omitted.

As described above, when the simultaneously measurable observable group generating unit 130 derives simultaneously measurable observable groups for each partition and the expectation values of observables in each simultaneously measurable observable group are measured simultaneously, the number of observables measurable by a single quantum circuit increases.

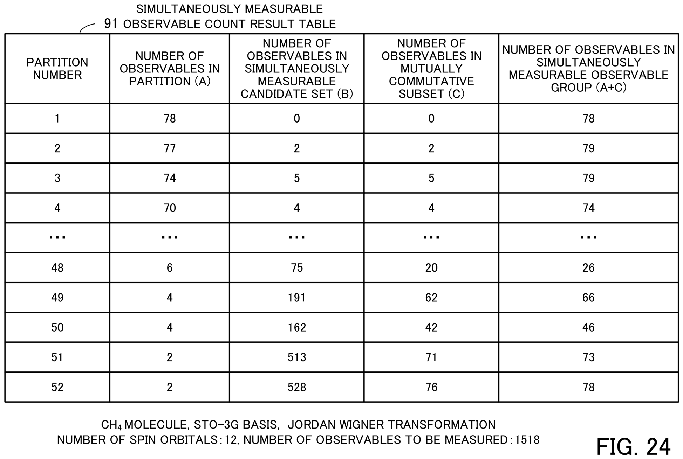

FIG. 24 illustrates an example of the number of observables in simultaneously measurable observable groups. A simultaneously measurable observable count result table 91 illustrated in FIG. 24 represents the number of observables in simultaneously measurable observable groups generated when solving the problem of determining the ground state of a $CH_4$ molecule (using the STO-3G basis). The Jordan Wigner transformation is used as the solution method. The number of spin orbitals is 12. In this case, the number of observables to be measured is 1518. The variables $b_i$ used in the Ising model equation for generating a mutually commutative subset are set to the same value for all observables (i.e., $b_1 = b_2 = ... = b_r$).

In the example of FIG. 24, the number of partitions generated through partitioning is 52. In the simultaneously measurable observable count result table 91, the following values are associated with each partition number: the number of observables in the partition (A), the number of observables in the simultaneously measurable candidate set (B), the number of observables in the mutually commutative subset (C), and the number of observables in the simultaneously measurable observable group (A + C). The number of observables in the partition indicates the number of observables included in the partition. The number of observables in the simultaneously measurable candidate set indicates the number of observables included in the simultaneously measurable candidate set. The number of observables in the mutually commutative subset indicates the number of observables included in the mutually commutative subset. The number of observables in the simultaneously measurable observable group indicates the number of observables included in the simultaneously measurable observable group.

As illustrated in the simultaneously measurable observable count result table 91, the smaller the number of observables in a partition, the greater the tendency for the number of observables in the simultaneously measurable candidate set and the number of observables in the mutually commutative subset to increase. Since the number of observables in a simultaneously measurable observable group is the sum of the number of observables in the partition and the number of observables in the mutually commutative subset, the total number of observables simultaneously measured increases when observables in the simultaneously measurable observable group are measured, compared to the case where only observables in the partition are simultaneously measured.

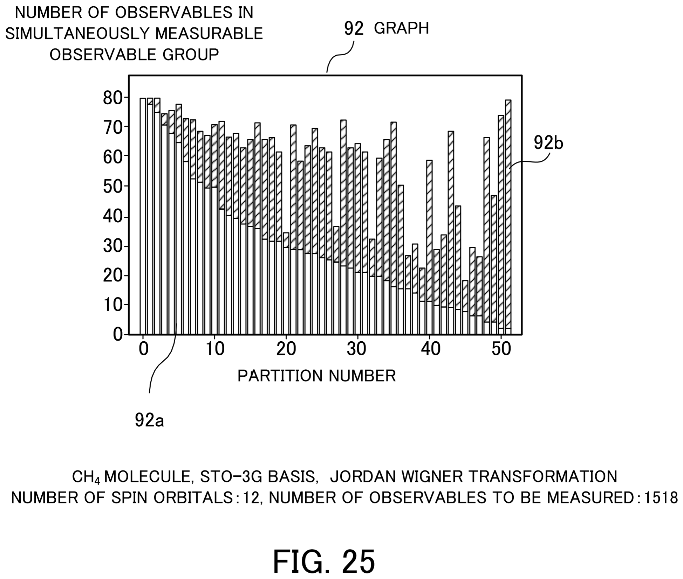

FIG. 25 illustrates an example of a graph representing the number of observables in simultaneously measurable observable groups. In a graph 92 illustrated in FIG. 25, the height of each bar corresponding to a partition number represents the number of observables in the simultaneously measurable observable group generated from the partition corresponding to the partition number. Each bar indicating the number of observables in a simultaneously measurable observable group is divided into a white region 92a and a hatched region 92b. The height of the white region 92a indicates the number of observables in the partition. The height of the hatched region 92b indicates the number of observables in the mutually commutative subset.

As is evident from the graph 92, by expanding each partition into a simultaneously measurable observable group and performing simultaneous measurement of the expectation values of observables, the number of observables from which information is obtained in each quantum circuit corresponding to each partition significantly increases.

An increase in the number of observables measured in each quantum circuit implies an increase in the number of observables whose expectation values are measured across multiple quantum circuits.

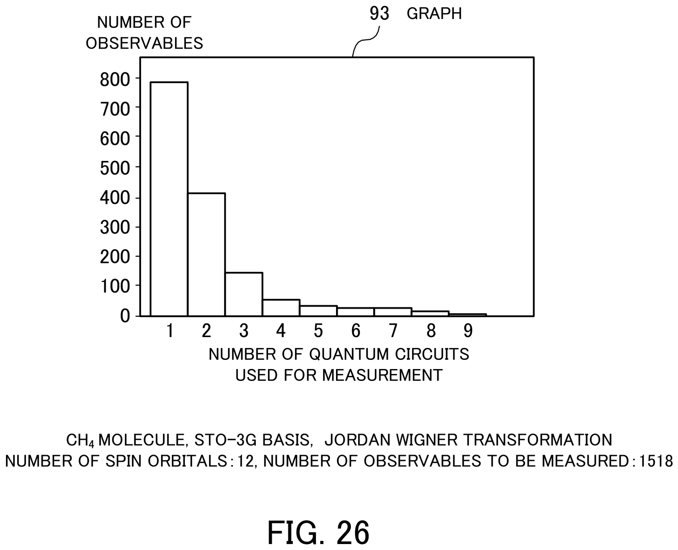

FIG. 26 illustrates a histogram of observables for each number of quantum circuits used for measurement. In a graph 93, the horizontal axis represents the number of quantum circuits used for measurement, and the vertical axis represents the number of observables whose expectation values are measured using that number of quantum circuits. As illustrated in the graph 93, the expectation values of approximately half of the observables are measured using multiple quantum circuits.

When each quantum circuit performs the same number of measurement repetitions, denoted as $n_{meas}$, the number of times the expectation value of an observable is measured becomes "$n_{meas} \times$ (number of quantum circuits used for measurement)". As a result, the error in the expectation value of an observable is given by "1/(number of quantum circuits used for measurement)$^{1/2}$". Reducing the error in the expectation value of each observable leads to an improvement in the accuracy of the solution to the problem to be solved.

Next, the effect of applying different values of $b_i$ to each observable will be described.

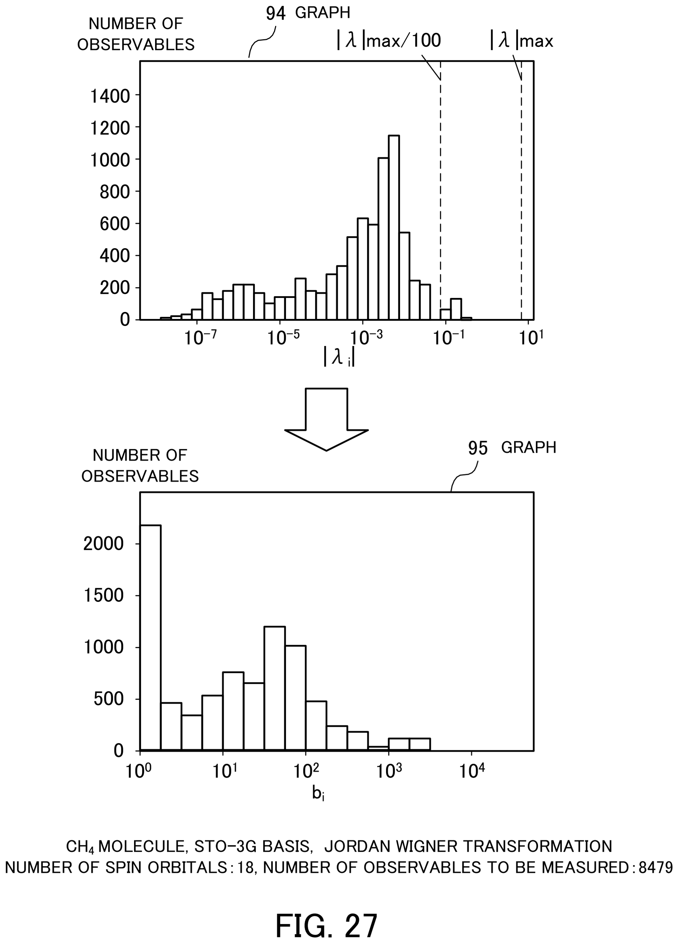

FIG. 27 illustrates an example of $b_i$ values determined based on $|\lambda_i|$. For example, consider a problem of determining the ground state of a $CH_4$ molecule (using the STO-3G basis) and solving it via the Jordan Wigner transformation. The number of spin orbitals is assumed to be 18. In this case, the number of observables to be measured is 8479.

The ground state of the $CH_4$ molecule is expressed as "$H = \lambda_1 P_1 + \lambda_2 P_2 + ... + \lambda_{8479} P_{8479}$". A graph 94 represents the frequency distribution of the values of $|\lambda_i|$. The horizontal axis of the graph 94 indicates $|\lambda i|$, and the vertical axis indicates the number of observables within each interval of $|\lambda i|$ (i.e., the number of observables whose corresponding value of $|\lambda i|$ falls within that interval). When $|\lambda_i| = |\lambda|_{max}$, the coefficient $b_i$ corresponding to the i-th observable $Q_i$ (expectation value $P_i$) in the Ising model equation given by Equation (2) becomes "$b_i = M$". When $|\lambda_i| = |\lambda|_{max}/100$, the coefficient $b_i$ corresponding to the i-th observable $Q_i$ (expectation value $P_i$) in the Ising model equation given by Equation (2) becomes "$b_i = M/100$".

When the values of $b_i$ are calculated using Equation (3) based on the frequency distribution of $|\lambda_i|$ illustrated in the graph 94, the resulting frequency distribution corresponds to a graph 95. The horizontal axis of the graph 95 indicates $b_i$, and the vertical axis indicates the number of observables within each interval of $b_i$ (i.e., the number of observables whose corresponding value of $b_i$ falls within that interval).

As illustrated in the graph 95, setting $b_i$ in accordance with $|\lambda i|$ causes the values of $b_i$ to be more dispersed. An observable $Q_i$ with a larger $b_i$ is more likely to be included in a simultaneously measurable observable group and has its expectation value measured using a greater number of quantum circuits.

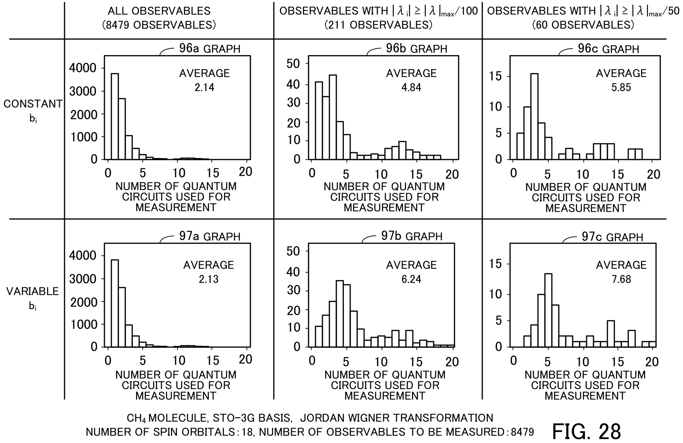

FIG. 28 illustrates an example of the relationship between $b_i$ values and the number of quantum circuits used for measurement. Graphs 96a to 96c depict histograms of the number of quantum circuits used for measuring observables in the case where the value of $b_i$ is fixed to a constant value regardless of $|\lambda_i|$. Graphs 97a to 97c depict histograms of the number of quantum circuits used for measuring observables in the case where the value of $b_i$ is set to a different value for each i. The graphs 96a and 97a are histograms for all observables (8479 observables). The graphs 96b and 97b are histograms for observables for which $|\lambda_i|$ is equal to or greater than $|\lambda|_{max}/100$ (211 observables). The graphs 96c and 97c are histograms for observables for which $|\lambda_i|$ is equal to or greater than $|\lambda|_{max}/50$ (60 observables). In each of the graphs 96a to 96c and 97a to 97c, the horizontal axis represents the number of quantum circuits used for measurement, and the vertical axis represents the number of observables measured using each number of quantum circuits.

When all observables are targeted, there is little difference between the graph 96a, in which $b_i$ is fixed to a constant value, and the graph 97a, in which $b_i$ is set to a different value for each i. When $b_i$ is fixed to a constant value, the average number of quantum circuits used for measurement is 2.14. When $b_i$ is set to a different value for each i, the average number of quantum circuits used for measurement is 2.13.

When observables for which $|\lambda_i|$ is equal to or greater than $|\lambda|_{max}/100$ are targeted, the number of quantum circuits used for measurement in the graph 97b, in which $b_i$ is set to a different value for each i, is generally greater than that in the graph 96b, in which $b_i$ is fixed to a constant value. When $b_i$ is fixed to a constant value, the average number of quantum circuits used for measurement is 4.84. When $b_i$ is set to a different value for each i, the average number of quantum circuits used for measurement is 6.24.

When observables for which $|\lambda_i|$ is equal to or greater than $|\lambda|_{max}/50$ are targeted, the number of quantum circuits used for measurement in the graph 97c, in which $b_i$ is set to a different value for each i, is generally greater than that in the graph 96c, in which $b_i$ is fixed to a constant value. When $b_i$ is fixed to a constant value, the average number of quantum circuits used for measurement is 5.85. When $b_i$ is set to a different value for each i, the average number of quantum circuits used for measurement is 7.68.

As described above, by applying different $b_i$ values for each i, the number of quantum circuits used for measurement increases for observables having a large $|\lambda_i|$. In other words, the expectation values of observables that have a greater impact on the accuracy of the solution to the problem to be solved are computed using a greater number of quantum circuits. As a result, the accuracy of the solution to the problem to be solved improves.

(c) Other Embodiments

In the second embodiment, quantum computation based on quantum circuits is executed by the gate-based quantum computer 300. However, by using a quantum simulator, the quantum computation may also be executed by the classical computer 100.

In addition, in the second embodiment, the computation of combinatorial optimization based on the Ising model equation is executed by the Ising machine 200. However, by using simulated annealing techniques, the computation of the Ising model equation may also be executed by the classical computer 100.

The foregoing merely illustrates the principles of the invention. Further, many modifications and variations are possible for those skilled in the art, and the present invention is not limited to the exact construction and application examples shown and described above, and all corresponding modifications and equivalents are deemed to be within the scope of the present invention as defined by the appended claims and their equivalents.

Reference Signs List

    1 observable group
    2 first partition
    3 second partition
    4 first quantum circuit
    5 second quantum circuit
    6 second set
    10 information processing apparatus
    11 storing unit
    12 processing unit

**Claims**

1.  An observable measurement support program that causes a computer to execute a process comprising:

    generating a plurality of partitions, each of which is a first subset obtained by dividing a first set including a plurality of observables to be measured and satisfies a condition that expectation values of the observables included in each of the first subsets are simultaneously measurable;
    extracting a second observable from a second partition, which is other than a first partition among the plurality of partitions, the second observable being such that an expectation value thereof is simultaneously measurable with an expectation value of each of a plurality of first observables included in the first partition; and
    computing the expectation value of the extracted second observable, based on a measurement result obtained after quantum computation according to a first quantum circuit corresponding to the first partition and a measurement result obtained after quantum computation according to a second quantum circuit corresponding to the second partition.

2.  The observable measurement support program according to claim 1, wherein:

the process further comprises generating, when the second observable is extracted in plurality, a second subset from a second set including the extracted second observables, the second subset satisfying a condition that expectation values of the extracted second observables are simultaneously measurable, and

the computing of the expectation value of the extracted second observable includes computing the expectation values of the extracted second observables included in the second subset.

3. The observable measurement support program according to claim 2, wherein:
the generating of the second subset includes:

generating an Ising model equation that includes variables indicating whether each of the extracted second observables is to be included in the second subset, a value of the Ising model equation increasing responsive to each pair of the extracted second observables that is not simultaneously measurable being included in the second subset, and decreasing as a number of the extracted second observables included in the second subset increases, and

generating the second subset based on values of the variables obtained by searching for a ground state using the Ising model equation.

4. The observable measurement support program according to claim 3, wherein:
the generating of the second subset includes generating the Ising model equation that includes a first coefficient multiplied by the variable corresponding to each of the extracted second observables, the first coefficient being included in a term whose value decreases as the number of the extracted second observables included in the second subset increases.

5. The observable measurement support program according to claim 4, wherein:
the generating of the second subset includes determining a value of the first coefficient multiplied by the variable corresponding to each of the extracted second observables, responsive to an equation for computing a solution to a problem based on expectation values of the plurality of observables being expressed as a linear combination of the expectation values of the plurality of observables, the value being determined based on a value of a second coefficient multiplied by the expectation value of each of the extracted second observables in the equation.

6. The observable measurement support program according to claim 5, wherein:
the generating of the second subset includes increasing the value of the first coefficient multiplied by the variable corresponding to each of the extracted second observables, responsive to an absolute value of the second coefficient multiplied by the expectation value of each of the extracted second observables increasing.

7. An observable measurement support method executed by a computer, the observable measurement support method comprising:

generating a plurality of partitions, each of which is a first subset obtained by dividing a first set including a plurality of observables to be measured and satisfies a condition that expectation values of the observables included in each of the first subsets are simultaneously measurable;

extracting a second observable from a second partition, which is other than a first partition among the plurality of partitions, the second observable being such that an expectation value thereof is simultaneously measurable with an expectation value of each of a plurality of first observables included in the first partition; and

computing the expectation value of the extracted second observable, based on a measurement result obtained after quantum computation according to a first quantum circuit corresponding to the first partition and a measurement result obtained after quantum computation according to a second quantum circuit corresponding to the second partition.

8. An information processing apparatus comprising:
a processing unit for:

generating a plurality of partitions, each of which is a first subset obtained by dividing a first set including a plurality of observables to be measured and satisfies a condition that expectation values of the observables included in each of the first subsets are simultaneously measurable,

extracting a second observable from a second partition, which is other than a first partition among the plurality of partitions, the second observable being such that an expectation value thereof is simultaneously measurable with an expectation value of each of a plurality of first observables included in the first partition, and

computing the expectation value of the extracted second observable, based on a measurement result obtained after quantum computation according to a first quantum circuit corresponding to the first partition and a measurement result obtained after quantum computation according to a second quantum circuit corresponding to the second partition.

FIG. 1

100

300

CLASSICAL
COMPUTER

GATE-BASED
QUANTUM
COMPUTER

200

ISING MACHINE

FIG. 2

FIG. 3

FIG. 4

COMMUTATION／
ANTICOMMUTATION
CORRESPONDENCE TABLE

35

| | $I$ | $X$ | $Y$ | $Z$ |
|---|---|---|---|---|
| $I$ | + | + | + | + |
| $X$ | + | + | − | − |
| $Y$ | + | − | + | − |
| $Z$ | + | − | − | + |

＋: COMMUTATIVE
－: ANTICOMMUTATIVE

COMPARE $I_0 Y_1 X_2$ and $Z_0 Z_1 Z_2$

$I_0 Z_0 = Z_0 I_0$    $Y_1 Z_1 = -Z_1 Y_1$    $X_2 Z_2 = -Z_2 X_2$

$(I_0 Y_1 X_2)(Z_0 Z_1 Z_2) = (Z_0 Z_1 Z_2)(I_0 Y_1 X_2)$

COMMUTATIVE

FIG. 5

71 QUANTUM CIRCUIT

EXPECTATION VALUE
COMPUTATION

LABEL 0 $\quad \langle Z_0 \rangle = (c_{000} + c_{001} + c_{010} + c_{011} - c_{100} - c_{101} - c_{110} - c_{111})/M$

LABEL 1 $\quad \langle Z_1 \rangle = (c_{000} + c_{001} - c_{010} - c_{011} + c_{100} + c_{101} - c_{110} - c_{111})/M$

LABEL 2 $\quad \langle Z_2 \rangle = (c_{000} - c_{001} + c_{010} - c_{011} + c_{100} - c_{101} + c_{110} - c_{111})/M$

LABEL 0,1 $\quad \langle Z_0 Z_1 \rangle = (c_{000} + c_{001} - c_{010} - c_{011} - c_{100} - c_{101} + c_{110} + c_{111})/M$

LABEL 0,2 $\quad \langle Z_0 Z_2 \rangle = (c_{000} - c_{001} + c_{010} - c_{011} - c_{100} + c_{101} - c_{110} + c_{111})/M$

LABEL 1,2 $\quad \langle Z_1 Z_2 \rangle = (c_{000} - c_{001} - c_{010} + c_{011} + c_{100} - c_{101} - c_{110} + c_{111})/M$

LABEL 0,1,2 $\langle Z_0 Z_1 Z_2 \rangle = (c_{000} - c_{001} - c_{010} + c_{011} - c_{100} + c_{101} + c_{110} - c_{111})/M$

# FIG. 6

$I_0Y_1X_2$

$Z_0Z_1Z_2$

$X_0I_1X_2$

EXPECTATION VALUE
COMPUTATION

LABEL 0     $\langle Y_1X_2 \rangle = -(c_{000} + c_{001} + c_{010} + c_{011} - c_{100} - c_{101} - c_{110} - c_{111})/M$

LABEL 1     $\langle Z_0Z_1Z_2 \rangle = (c_{000} + c_{001} - c_{010} - c_{011} + c_{100} + c_{101} - c_{110} - c_{111})/M$

LABEL 2     $\langle X_0X_1 \rangle = (c_{000} - c_{001} + c_{010} - c_{011} + c_{100} - c_{101} + c_{110} - c_{111})/M$

LABEL 0,1    $\langle Z_0X_1X_2 \rangle = -(c_{000} + c_{001} - c_{010} - c_{011} - c_{100} - c_{101} + c_{110} + c_{111})/M$

LABEL 0,2    $\langle X_0Y_1 \rangle = -(c_{000} - c_{001} + c_{010} - c_{011} - c_{100} + c_{101} - c_{110} + c_{111})/M$

LABEL 1,2    $\langle Y_0Z_1Y_2 \rangle = -(c_{000} - c_{001} - c_{010} + c_{011} + c_{100} - c_{101} - c_{110} + c_{111})/M$

LABEL 0,1,2 $\langle Y_0X_1Z_2 \rangle = -(c_{000} - c_{001} - c_{010} + c_{011} - c_{100} + c_{101} + c_{110} - c_{111})/M$

FIG. 7

FIG. 8

FIG. 9

FIG. 10

LISTING ELEMENTS OF OBSERVABLE GROUP
TO BE MEASURED

OBSERVABLE
GROUP

40

FIG. 11

DETERMINING COMMUTATION RELATIONS
BETWEEN ELEMENTS

40 OBSERVABLE
GROUP

ASSIGNING VARIABLES

40 OBSERVABLE GROUP

FIG. 12

FORMULATING EQUATION:

76 ISING MODEL EQUATION

$$f(\{x_i\}) = -\sum_i x_i + \sum_{i,j} c_{ij} x_i x_j$$

$\{x_i\}$: BINARY VARIABLES
$x_i = 1$: INCLUDED IN PARTITION
$x_i = 0$: NOT INCLUDED IN PARTITION

$\{c_{ij}\}$: NON−NEGATIVE CONSTANTS
$c_{ij} = 0$: $x_i$ AND $x_j$ ARE COMMUTATIVE
$c_{ij} = m$: $x_i$ AND $x_j$ ARE ANTICOMMUTATIVE

200

ISING MACHINE

COMPUTING $\{x_i\}$ THAT MINIMIZES $f(\{x_i\})$

FIG. 13

FIG. 14

NO APPLICABLE OBSERVABLES

EXTRACTION

FIG. 15

64 SIMULTANEOUSLY
MEASURABLE OBSERVABLE
GROUP

FIG. 16

SIMULTANEOUSLY
64 MEASURABLE OBSERVABLE
GROUP

NUMBER OF
MEASUREMENTS : N

$q_0 \rightarrow$ YXXY ⇐
$q_1 \rightarrow$ XYXY
$q_2 \rightarrow$ XXYY ⇐
$q_3 \rightarrow$ XXXX
$q_0 \& q_1 \rightarrow$ ZZII ⇐
$q_0 \& q_2 \rightarrow$ ZIZI ⇐
$q_0 \& q_3 \rightarrow$ ZIIZ ⇐
$q_1 \& q_2 \rightarrow$ IZZI ⇐
$q_1 \& q_3 \rightarrow$ IZIZ ⇐
$q_2 \& q_3 \rightarrow$ IIZZ ⇐
$q_0 \& q_1 \& q_2 \rightarrow$ YYYY
$q_0 \& q_1 \& q_3 \rightarrow$ YYXX ⇐
$q_0 \& q_2 \& q_3 \rightarrow$ YXYX
$q_1 \& q_2 \& q_3 \rightarrow$ XYYX ⇐
$q_0 \& q_1 \& q_2 \& q_3 \rightarrow$ ZZZZ

**FIG. 17**

⇐ : EXPECTATION
VALUE
COMPUTATION

QUANTUM
81 CIRCUIT

NUMBER OF MEASUREMENTS:M

SIMULTANEOUSLY
63 MEASURABLE OBSERVABLE
GROUP

M + N
MEASUREMENTS

SIMULTANEOUSLY
MEASURABLE OBSERVABLE
GROUP

NUMBER OF
MEASUREMENTS: N

$$ERROR \propto \frac{1}{\sqrt{NUMBER\ OF\ MEASUREMENTS}}$$

FIG. 18

START

ENUMERATE ELEMENTS OF
OBSERVABLE GROUP P — S101

DETERMINE COMMUTATION RELATION — S102

GENERATE SIMULTANEOUSLY
MEASURABLE OBSERVABLE GROUPS — S103

SELECT ONE SIMULTANEOUSLY
MEASURABLE OBSERVABLE GROUP — S104

GENERATE QUANTUM CIRCUIT FOR
SIMULTANEOUS MEASUREMENT — S105

PROVIDE COMPUTATION INSTRUCTION
TO GATE-BASED QUANTUM COMPUTER — S106

RECORD MEASUREMENT RESULTS — S107

DOES ANY
UNSELECTED SIMULTANEOUSLY
MEASURABLE OBSERVABLE
GROUP REMAIN? — S108

YES

NO

COMPUTE EXPECTATION VALUES OF
OBSERVABLES — S109

OUTPUT SOLUTION — S110

END

FIG. 19

```
                    ┌─────────────────────────────┐
                    │  START OF SIMULTANEOUSLY    │
                    │  MEASURABLE OBSERVABLE GROUP │
                    │        GENERATION           │
                    └─────────────────────────────┘
                                  │
                                  ▼
          ┌───────────────────────────────────────┐   S201
          │             PARTITIONING              │
          │      (PARTITIONS {C₁,•••,Cₘ})         │
          └───────────────────────────────────────┘
                                  │
                                  ▼
          ┌───────────────────────────────────────┐   S202
          │              k = 1, •••, m            │
          └───────────────────────────────────────┘
                                  │
                                  ▼
          ┌───────────────────────────────────────┐   S203
          │        GENERATE SIMULTANEOUSLY        │
          │    MEASURABLE CANDIDATE SET (Qₖ)      │
          └───────────────────────────────────────┘
                                  │
                                  ▼
          ┌───────────────────────────────────────┐   S204
          │      GENERATE MUTUALLY COMMUTATIVE    │
          │              SUBSET (Q'ₖ)             │
          └───────────────────────────────────────┘
                                  │
                                  ▼
          ┌───────────────────────────────────────┐   S205
          │  SET UNION OF PARTITION AND MUTUALLY  │
          │ COMMUTATIVE SUBSET AS SIMULTANEOUSLY  │
          │    MEASURABLE OBSERVABLE GROUP        │
          │         (Rₖ = Cₖ + Q'ₖ)              │
          └───────────────────────────────────────┘
                                  │
                                  ▼
          ┌───────────────────────────────────────┐   S206
          │              k = 1, •••, m            │
          └───────────────────────────────────────┘
                                  │
                                  ▼
                          ┌──────────────┐
                          │     END      │
                          └──────────────┘
```

$$\text{PARTITIONS } \{C_1, \cdots, C_m\}$$

$$k = 1, \cdots, m$$

GENERATE SIMULTANEOUSLY MEASURABLE CANDIDATE SET $(Q_k)$

GENERATE MUTUALLY COMMUTATIVE SUBSET $(Q'_k)$

$$R_k = C_k + Q'_k$$

$$k = 1, \cdots, m$$

# FIG. 20

START OF SIMULTANEOUSLY
MEASURABLE CANDIDATE SET
GENERATION

S301

GENERATE EMPTY
SIMULTANEOUSLY MEASURABLE
CANDIDATE SET $Q_k$

S302

$l = 1, \cdots, n'$

S303

IS
$Y_l$ COMMUTATIVE WITH ALL OF
$X_1, \cdots, X_n$?

NO

YES

S304

ADD $Y_l$ TO $Q_k$

S305

$l = 1, \cdots, n'$

END

FIG. 21

START OF MUTUALLY COMMUTATIVE
SUBSET GENERATION

FORMULATE ISING MODEL EQUATION
$f(\{x_i\})$ — S401

INSTRUCT ISING MACHINE TO SEARCH
FOR GROUND STATE OF ISING MODEL — S402

ACQUIRE $\{x_i\}$ THAT MINIMIZES $f(\{x_i\})$ — S403

INCLUDE ALL $Q_i$ CORRESPONDING TO $i$
FOR WHICH $x_i = 1$ IN $Q'_k$ — S404

END

# FIG. 22

ASSIGNING VARIABLES {x$_i$} TO
OBSERVABLES {Q$_i$}

$Q_1(x_1)$

$Q_5(x_5)$

$Q_2(x_2)$

$Q_4(x_4)$

$Q_3(x_3)$

FORMULATING EQUATION

TERM 1    TERM 2

86 ISING MODEL EQUATION

$$f(\{x_i\}) = -\sum_i b_i x_i + \sum_{i,j} c_{ij} x_i x_j$$

{$x_i$}: BINARY VARIABLES
$x_i$ = 1: INCLUDED IN PARTITION
$x_i$ = 0: NOT INCLUDED IN PARTITION

{$c_{ij}$}: NON−NEGATIVE CONSTANTS
$c_{ij}$ = 0: $x_i$ AND $x_j$ ARE
        COMMUTATIVE
$c_{ij}$ = $m$: $x_i$ AND $x_j$ ARE
        ANTICOMMUTATIVE

## FIG. 23

SIMULTANEOUSLY MEASURABLE
91 OBSERVABLE COUNT RESULT TABLE

| PARTITION NUMBER | NUMBER OF OBSERVABLES IN PARTITION (A) | NUMBER OF OBSERVABLES IN SIMULTANEOUSLY MEASURABLE CANDIDATE SET (B) | NUMBER OF OBSERVABLES IN MUTUALLY COMMUTATIVE SUBSET (C) | NUMBER OF OBSERVABLES IN SIMULTANEOUSLY MEASURABLE OBSERVABLE GROUP (A+C) |
|---|---|---|---|---|
| 1 | 78 | 0 | 0 | 78 |
| 2 | 77 | 2 | 2 | 79 |
| 3 | 74 | 5 | 5 | 79 |
| 4 | 70 | 4 | 4 | 74 |
| ... | ... | ... | ... | ... |
| 48 | 6 | 75 | 20 | 26 |
| 49 | 4 | 191 | 62 | 66 |
| 50 | 4 | 162 | 42 | 46 |
| 51 | 2 | 513 | 71 | 73 |
| 52 | 2 | 528 | 76 | 78 |

$CH_4$ MOLECULE, STO−3G BASIS, JORDAN WIGNER TRANSFORMATION
NUMBER OF SPIN ORBITALS : 12, NUMBER OF OBSERVABLES TO BE MEASURED : 1518

FIG. 24

NUMBER OF OBSERVABLES IN SIMULTANEOUSLY MEASURABLE OBSERVABLE GROUP

92 GRAPH

92a

92b

PARTITION NUMBER

$CH_4$ MOLECULE, STO-3G BASIS, JORDAN WIGNER TRANSFORMATION
NUMBER OF SPIN ORBITALS : 12, NUMBER OF OBSERVABLES TO BE MEASURED : 1518

# FIG. 25

NUMBER OF
OBSERVABLES

93   GRAPH

NUMBER OF QUANTUM CIRCUITS
USED FOR MEASUREMENT

CH$_4$ MOLECULE, STO-3G BASIS,  JORDAN WIGNER TRANSFORMATION
NUMBER OF SPIN ORBITALS:12, NUMBER OF OBSERVABLES TO BE MEASURED:1518

FIG. 26

CH$_4$ MOLECULE, STO−3G BASIS, JORDAN WIGNER TRANSFORMATION
NUMBER OF SPIN ORBITALS:18, NUMBER OF OBSERVABLES TO BE MEASURED:8479

FIG. 27

| | ALL OBSERVABLES<br>(8479 OBSERVABLES) | OBSERVABLES WITH $|\lambda_i| \geq |\lambda|_{max}/100$<br>(211 OBSERVABLES) | OBSERVABLES WITH $|\lambda_i| \geq |\lambda|_{max}/50$<br>(60 OBSERVABLES) |
|---|---|---|---|
| CONSTANT<br>$b_i$ | 96a GRAPH<br>AVERAGE 2.14 | 96b GRAPH<br>AVERAGE 4.84 | 96c GRAPH<br>AVERAGE 5.85 |
| VARIABLE<br>$b_i$ | 97a GRAPH<br>AVERAGE 2.13 | 97b GRAPH<br>AVERAGE 6.24 | 97c GRAPH<br>AVERAGE 7.68 |

(NUMBER OF QUANTUM CIRCUITS USED FOR MEASUREMENT on horizontal axis of each graph)

$CH_4$ MOLECULE, STO−3G BASIS, JORDAN WIGNER TRANSFORMATION
NUMBER OF SPIN ORBITALS : 18, NUMBER OF OBSERVABLES TO BE MEASURED : 8479

FIG. 28

## INTERNATIONAL SEARCH REPORT

| | International application No. |
|---|---|
| | **PCT/JP2023/014799** |

| **A.** | **CLASSIFICATION OF SUBJECT MATTER** |
|---|---|

*G06N 10/00*(2022.01)i
FI:   G06N10/00

According to International Patent Classification (IPC) or to both national classification and IPC

| **B.** | **FIELDS SEARCHED** |
|---|---|

Minimum documentation searched (classification system followed by classification symbols)

G06N10/00-10/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | WO 2022/269712 A1 (FUJITSU LIMITED) 29 December 2022 (2022-12-29)<br>entire text, all drawings | 1-8 |
| A | 栗田 知周 ほか, デジタルアニーラを用いた量子状態測定の高速化の取り組み, 情報処理学会 研究報告 量子ソフトウェア (QS), 24 June 2021, vol. 2021-QS-3, no. 15, pp. 1-7, ISSN 2435-6492 (KURITA, Tomoshika et al. Fast Measurement of Quantum States Using Digital Annealer. IPSJ SIG Technical Report, Quantum Software (QS).)<br>entire text, all drawings | 1-8 |
| A | GOKHALE, P. et al. Minimizing State Preparations in Variational Quantum Eigensolver by Partitioning into Commuting Families, arXiv.org [online], 31 July 2019, pp. 1-23, [retrieved on 06 June 2023], Internet: <URL:https://arxiv.org/pdf/1907.13623v1.pdf>, <DOI: 10.48550/arXiv.1907.13623><br>entire text, all drawings | 1-8 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 June 2023** | **20 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/014799** |

| Patent document cited in search report | Publication date (day/month/year) | Patent family member(s) | Publication date (day/month/year) |
| --- | --- | --- | --- |
| WO 2022/269712 A1 | 29 December 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022269712 A